Europäisches Patentamt

European Patent Office

Office européen des brevets

(19)

(11) EP 1 507 401 A2

(12) **EUROPEAN PATENT APPLICATION**

(43) Date of publication:
16.02.2005 Bulletin 2005/07

(51) Int Cl.7: **H04N 1/32**

(21) Application number: 04254844.6

(22) Date of filing: 12.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 12.08.2003 JP 2003292493
19.09.2003 JP 2003329076
28.07.2004 JP 2004219895
28.07.2004 JP 2004219896

(71) Applicant: **Ricoh Company Ltd.**
**Tokyo 143-8555 (JP)**

(72) Inventor: **Maruyama, Teruyuki**
**Yokohama-shi, Kanagawa (JP)**

(74) Representative: **Mounteney, Simon James**
**Marks & Clerk, 57-60 Lincolns Inn Fields**
**London WC2A 3LS (GB)**

(54) **Document edit method and image processing apparatus**

(57)     A document edit method edits a document containing image data, stored in an image processing apparatus (1), at a node (102) in a network (134). In the document edit method, a document of interest is received from the node (102) through the network (134). Document-related information with respect to the document is supplied to the node (102). Edit job information is created for storing edit content information which is created when the document is edited at the node (102). The edit content information is stored in the edit job information. An edit job of editing the document is performed based on the edit content information stored in the edit job information.

FIG.1

EP 1 507 401 A2

**Description**

BACKGROUND OF THE INVENTION

1. Field of The Invention

The present invention relates to a document edit method and an image processing apparatus which are configured to edit a document containing image data from a node in a network.

2. Description of The Related Art

In recent years, with the development of computers and networks, the user on a personal computer can download a document containing image data (also called the document image) to the personal computer through a network from the image storage device in which various images are stored, and can edit the received image data on the computer.

Moreover, in recent years, it is also possible that the user on a mobile terminal, such as a cellular phone or PDA (personal digital assistant), downloads and displays the document image through the network. The size of such image data is comparatively large. In many cases, the size of the image data downloaded to the personal computer or mobile terminal amounts to several megabytes.

For this reason, when the user on the personal computer wishes to download and edit the document image of interest through the network, much time is needed for downloading the image. Moreover, when the user on the mobile terminal wishes to download and display the document image of interest through the network, downloading the image is impossible if the memory resources of the mobile terminal are too small or the size of the document image of interest is too large. Even when the downloading of the image is completed, much time is needed for scrolling the image or editing the image depending on the performance of the processor or the image edit software. Therefore, in the case of the conventional document edit method and apparatus, it is desirable to improve the ease of use when editing and outputting the document image at the node in the network.

SUMMARY OF THE INVENTION

An object of the present invention is to provide an improved document edit method and image processing apparatus in which the above-described problems are eliminated.

Another object of the present invention is to provide a document edit method which improves the ease of use when editing, at a node in the network, a document image received from an image processing apparatus and outputting the edited document image in response to a request from the node.

Another object of the present invention is to provide an image processing apparatus which improves the ease of use when editing a document image at a node in the network and outputting the edited document image in response to a request from the node.

The above-mentioned objects of the present invention are achieved by a document edit method for editing a document containing image data, stored in an image processing apparatus, at a node which communicates with the image processing apparatus through a network, the document edit method comprising the steps of: receiving a document of interest from the node through the network; supplying document-related information with respect to the document to the node; creating edit job information for storing edit content information which is created when the document is edited at the node; storing the edit content information in the edit job information; and performing an edit job of editing the document based on the edit content information stored in the edit job information.

The above-mentioned objects of the present invention are achieved by an image processing apparatus having programs configured to edit a document containing image data at a node which communicates with the image processing apparatus through a network, and configured to perform processing related to the document editing, the image processing apparatus comprising: a document-related information detection unit detecting document-related information with respect to the document; a document-related-information supplying unit supplying the node with the detected document-related information; an edit content information acquisition unit receiving edit content information, which is created when the document is edited at the node, from the node; and an edit execution unit editing the document based on the received edit content information and providing a shared interface to the respective programs.

The above-mentioned objects of the present invention are achieved by a document edit method for editing a document containing image data, stored in an image processing apparatus, at a node which communicates with the image processing apparatus through a network, comprising the steps of: supplying the node with document-related information with respect to the document stored in the image processing apparatus; editing the document at the node based on the document-related information; and reflecting edit operation informationwhich is created when the document is edited at the node, to the document in the image processing apparatus.

The above-mentioned objects of the present invention are achieved by an image processing apparatus which allows a node, which communicates with the image processing apparatus through a network, to edit a document containing image data stored in the image processing apparatus, the image processing apparatus comprising: a document storage unit storing the document; a document-related information creation unit creating document-related information with respect to the document; a document-related information supplying unit supplying the node with the document-related information; an edit operation information receiving unit receiving edit operation information which is created when the document is edited at the node; and an edit reflection unit reflecting the edit operation information to the image data of the document in the image processing apparatus.

The above-mentioned objects of the present invention are achieved by a document edit method for editing a document containing image data, stored in an image processing apparatus, by a node which communicates with the image processing apparatus through a network, the method comprising the steps of: acquiring document-related information with respect to the document stored in the image processing apparatus; displaying the document-related information at the node; reflecting edit operation information, which is created when the document is edited, to the displayed document-related information; and requesting the image processing apparatus to create an edit job instruction containing the edit operation information and to perform an edit job of editing the document based on the edit operation information contained in the edit job instruction.

The above-mentioned objects of the present invention are achieved by a computer program product embodied therein for causing a computer to execute a document edit method which edits a document containing image data, stored in an image processing apparatus, by a node which communicates with the image processing apparatus through a network, the document edit method comprising steps of: acquiring document-related information with respect to the document stored in the image processing apparatus; displaying the document-related information at the node; reflecting edit operation information, which is created when the document is edited, to the displayed document-related information; and requesting the image processing apparatus to create an edit job instruction containing the edit operation information and to perform an edit job of editing the document based on the edit operation information contained in the edit job instruction.

According to the present invention, it is possible to provide the document edit method and the image processing apparatus which are appropriate for easily editing a document containing image data at a node in the network and outputting the edited document image in response to a request from the node.

BRIEF DESCRIPTION OF THE DRAWINGS

Other objects, features and advantages of the present invention will be apparent from the following detailed description when reading in conjunction with the accompanying drawings.

FIG. 1 is a diagram showing the composition of a document edit system in which the document edit method of the invention is embodied.

FIG. 2 is a block diagram of a multi-function peripheral system in which the image processing apparatus of the invention is embodied.

FIG. 3 is a block diagram showing the hardware composition of the multi-function peripheral system.

FIG. 4 is a block diagram showing the software composition of the client.

FIG. 5 is a block diagram showing the hardware composition of the client.

FIG. 6 is a block diagram showing the software composition of the multi-function peripheral system.

FIG. 7 is a block diagram showing the composition of the WS document edit service and the document edit service SF.

FIG. 8 is a sequence diagram for explaining the processing to receive the image skew information at the client in the network.

FIG. 9 is a diagram showing an example of the request "getImagePropsByTicket" which is notified to the WS document edit service by the client.

FIG. 10 is a diagram showing an example of the property "imageProps" which is received at the client with the document image from the WS document edit service.

FIG. 11 is a flowchart for explaining the processing to detect the image skew in the document image.

FIG. 12 is a flowchart for explaining the processing to detect the noise level in the document image.

FIG. 13 is a diagram showing an example of the operation panel screen of the client application.

FIG. 14 is a sequence diagram for explaining the processing of the client when editing the image data of the document of interest and receiving the identification of the edit job instruction from the image processing apparatus.

FIG. 15 is a sequence diagram for explaining the processing of the WS document edit service.

FIG. 16 is a sequence diagram for explaining the processing of the document edit service SF.

FIG. 17 is a sequence diagram for explaining the processing of the document edit service SF.

FIG. 18 is a diagram for explaining the respective data structure of the edit job instruction, the edit job, and the internal edit job.

FIG. 19 is a diagram showing an example of the edit job instruction creation request which is notified to the WS document edit service by the client.

FIG. 20 is a diagram showing an example of the edit job instruction creation request which is notified to the WS document edit service by the client.

FIG. 21 is a block diagram showing the software composition of the multi-function peripheral system when the client uses the Web browser instead of the client application.

FIG. 22 is a sequence diagram for explaining the processing when the client uses the Web browser instead of the client application.

FIG. 23 is a block diagram showing the software composition of the multi-function peripheral system when the printing of the edited document image is requested by the client.

FIG. 24 is a block diagram showing the software composition of the multi-function peripheral system when the delivery of the edited document image to another node in the network is requested by the client.

FIG. 25 is a diagram showing the composition of a document edit system in which the document edit method of the invention is embodied.

FIG. 26 is a block diagram showing the composition of the WS document management service.

FIG. 27 is a block diagram showing the composition of the WS document edit service.

FIG. 28 is a sequence diagram for explaining the processing to receive the display image data of the document of interest at the client.

FIG. 29 is a sequence diagram for explaining the processing to edit the image data of the document of interest and receive the edit job.

FIG. 30 is a flowchart for explaining the processing of the client.

FIG. 31 is a flowchart for explaining the processing of the document management module.

FIG. 32 is a flowchart for explaining the processing of the document edit module.

FIG. 33 is a flowchart for explaining the processing of the reduced image management module.

FIG. 34 is a flowchart for explaining the processing of the reduced image management module.

FIG. 35 is a flowchart for explaining the processing of the WS document management service.

FIG. 36 is a flowchart for explaining the processing of the WS document management service.

FIG. 37 is a flowchart for explaining the processing of the WS document edit service.

FIG. 38 is a flowchart for explaining the processing of the image editor.

FIG. 39 is a diagram showing the condition of the client in which the document image is displayed.

FIG. 40 is a diagram showing the condition of the client in which the document image is edited.

FIG. 41 is a diagram for explaining the job queue.

FIG. 42 is a diagram for explainng the plane job queue.

FIG. 43 is a diagram for explaining the color transform processing of the job interpreter when the plain job is created.

## DETAILED DESCRIPTION OF PREFERRED EMBODIMENTS

A description will now be given of the preferred embodiments of the invention with reference to the accompanying drawings.

In the following, the preferred embodiments of the invention will be explained, assuming that the multi-function peripheral system is an image processing apparatus and the client is a node in the network.

Moreover, the terms image data and document will be used in the following explanation, and it is supposed that a document contains image data.

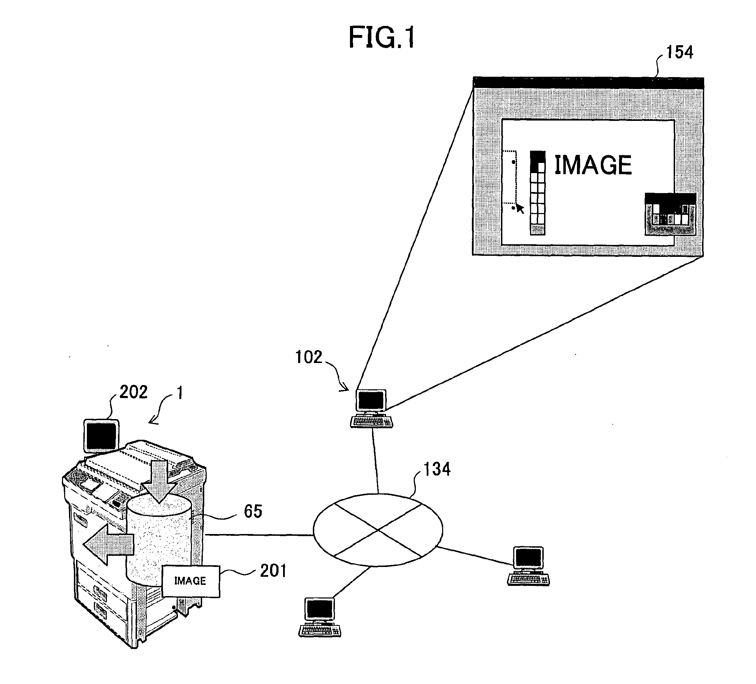

A description will be given of a document edit system in which the document edit method of the invention is embodied, with reference to FIG. 1.

As shown in FIG. 1, the multi-function peripheral system 1 corresponding to the image processing apparatus, and the client 102 corresponding to the node in which the document is edited are connected through the network 134. The image editing screen 154 is displayed on the client 102 as shown in FIG. 1.

The multi-function peripheral system 1 includes the hard disk drive (HDD) 65 for accumulating document images, and the display screen 202. The document image 201 is created from the document images accumulated in HDD 65.

Moreover, the display screen 202 is provided for editing the document by the multi-function peripheral system 1.

With such composition, it is possible for the client 102 to edit the document in HDD 65 of the multi-function peripheral system 1 according to the document edit method of the invention.

In the present embodiment, the image of the document which is edited by the client 102 is not the document image stored in the HDD 65 of the multi-function peripheral system 1 itself. It is, for example, a reduced document image which is reduced both in the main scanning direction and the sub-scanning direction to one sixth of the original size, respectively.

In addition, the client 102 may be a personal computer as shown in FIG. 1. Alternatively, the client 102 may be a cellular phone or PDA (personal digital assistant).

Next, a description will be given of the composition of the multi-function peripheral system 1 and the client 102.

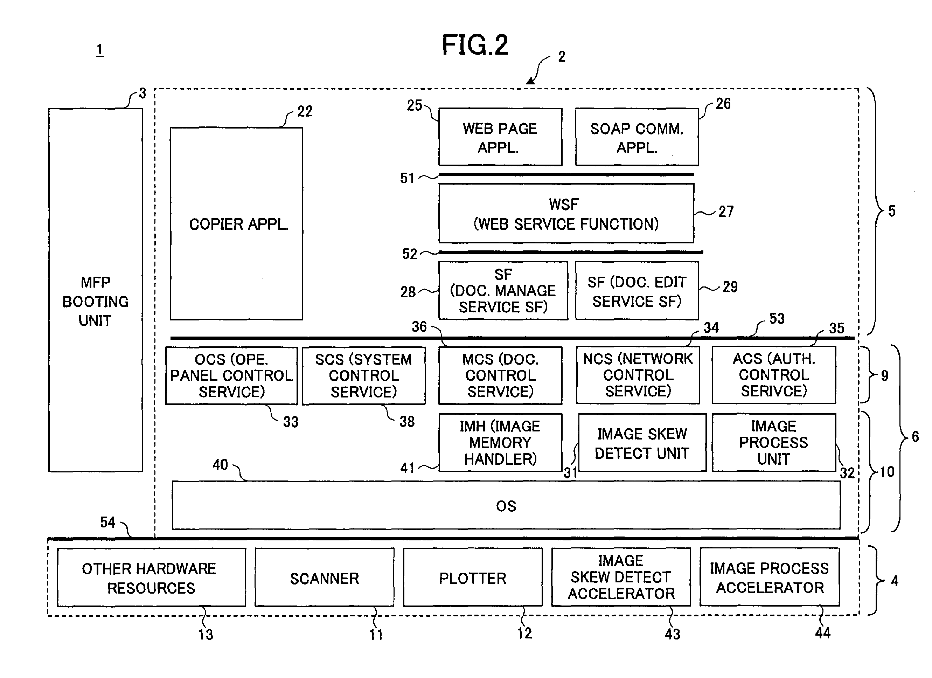

FIG. 2 is a block diagram of one embodiment of the multi-function peripheral system. The multi-function peripheral (MFP) system 1 is constituted so that the software group 2, the MFP booting unit 3, and the hardware resources 4 are provided.

The MFP booting unit 3 is first initiated upon power up of the multi-function peripheral system 1, and starts execution of the software concerned.

For example, the MFP booting unit 3 reads the program of the application layer 5 or the platform layer 6 from the HDD etc., transmits each read program to the memory storage, and starts execution of the program.

The hardware resources 4 comprise the scanner 11, the plotter 12, the image skew detection accelerator 43, the image process accelerator 44, and other hardware resources 13 including the ADF (automatic document feeder) etc.

Moreover, the software group 2 is started and executed on the OS (operating system) 40, such as UNIX (registered trademark).

The application layer 5 includes the programs which respectively perform processing specific to the user services concerning image formation, such as copy, print, fax or scanning.

In the application layer 5, the copier application 22 which is the application program for copying, the WEB page application 25, the SOAP communication application 26, the document management service SF (Shared Function) 28, the document edit services SF (Shared Function) 29, and the WSF (Web Service Function) 27 are provided.

When providing the document management service SF 28 and the document management service SF 29 collectively, they are expressed only as a single SF. This SF is not limited to the two units as shown in FIG. 2, and the number of the SFs may be varied according to the specifications.

Moreover, the SF provides the shared interface common to the various programs, such as the applications or the modules. Moreover, SOAP is the abbreviation of Simple Object Access Protocol.

The WSF 27 includes the application program interface (API) 51 which receives the processing request from the WEB page application 25 or the SOAP communication application 26 in accordance with the predefined function.

Moreover, the SF includes the API 52 which receives the processing request from WSF 27 in accordance with the pre-defined function.

When the WSF 27 receives the processing request from the WEB page application 25 or the SOAP communication application 26 through the API 51, the WSF 27 selects one of the document management services SF 28 and 29 in accordance with the received processing request. The WSF 27 transmits to the selected document management service SF the received processing request through the API 51.

When the selected one of the document management service SF 28 and the document management service SF 29 receives the processing request through the API 52, the selected SF performs processing according to the received processing request.

The SOAP communication application 26 is the upper layer module which sends the processing request, and performs the creation and interpretation of the SOAP message as a server of Web service.

The platform layer 6 comprises the control service layer 9 which interprets the processing request from the application layer 5 and generates the acquisition request of the hardware resources 4, and the handler layer 10 which manages the one or more hardware resources 4 and arbitrates the acquisition request from the control service layer 9.

The control service layer 9 comprises one or more services modules, including the network control service 34, the screen control service 33, the authentication control service 35, the document control service 36, and the system-control service 38.

In addition, the platform layer 6 includes the API 53 which receives the processing request from the application layer 5 in accordance with the pre-defined function.

The OS 40 carries out parallel execution of the software modules of the application layer 5 and the platform layer 6 as a process.

The process of the network control service 34 supplys the service which can be used in common to the applications which need the network I/O, distributes the data received by each protocol from the network side to each application, and performs the agent function at the time of transmitting the data from each application to the network side.

For example, the network control service 34 controls data communication with the network device connected through the network with the HTTP (hypertext transfer protocol) by using the httpd (hypertext transfer protocol daemon).

The process of the document control service 36 performs memory control of the acquisition of memory and release, use of HDD, etc.

The process of the system-control service 38 processes application management, control unit control, the system screen display, LED display, hardware-resources management, interruption application control, etc.

The process of the authentication control service 35 performs processing concerning the user's authentication.

Moreover, the handler layer 10 comprises the image memory handler (IMH) 41 which manages memory assigned to the assignment and the process of memory over the process, the image skew detection unit 31 which performs control of the image skew detection accelerator 43, and the image process unit 32 which performs control of the image process accelerator 44.

The image skew detection unit 31 and the image process unit 32, which correspond to the document-related information detection unit, perform detection of the image skew of the image data and the image-processing of the image data using the respective accelerators 43 and 44 in response to the conversion request of the image data from the image memory handler 41.

Specifically, the image process accelerator 44 is capable of changing the original document image in size into a reduced document image with a smaller size, and capable of converting the format of the image codes. The traffic of the network can be reduced and the reduction of the use of the memory of the client 102 is possible if the reduced image with a size smaller than the size of the original image can be obtained with the image process accelerator 44.

Moreover, the image skew detection unit 31 is capable of detecting the image skew of a document image or the inclination of a displayed image data etc.

In addition, the image skew detection unit 31 and the image process unit 32 can also be realized by the software.

The multi-function peripheral system 1 can carry out the processing required for the copier application 22 by the unitary management of the platform layer 6.

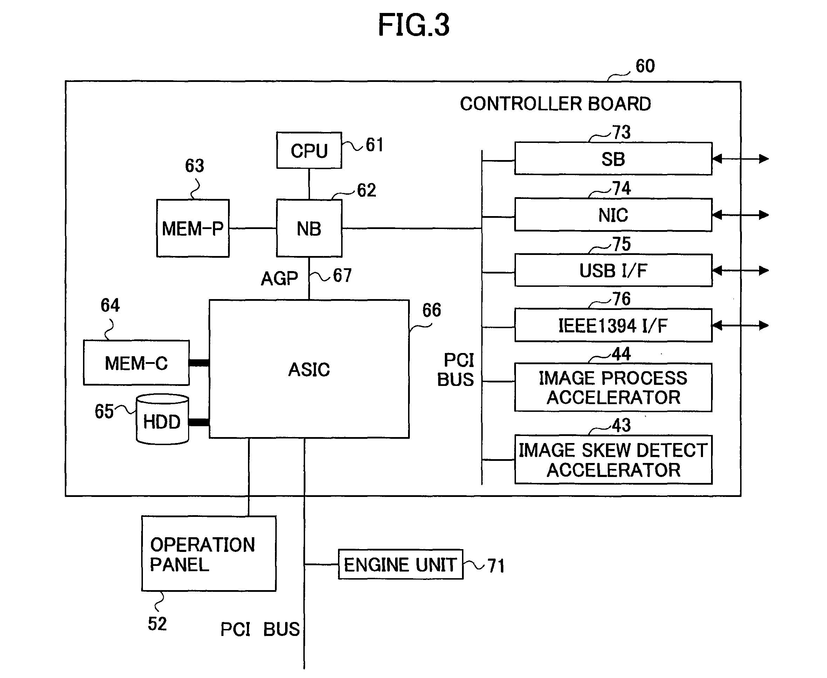

Next, a description will be given of the hardware composition of the multi-function peripheral system 1. FIG. 3 shows the hardware composition of the multi-function peripheral system 1.

As shown in FIG. 3, the multi-function peripheral system 1 comprises the controller board 60, the operation panel 52, and the engine 71.

Moreover, the controller board 60 contains the CPU 61, the ASIC 66, the HDD 65, the system memory (MEM-P) 63, the local memory (MEM-C) 64, the north bridge (NB) 62, the south bridge (SB) 73, the NIC (network interface card) 74, the USB device 75, the IEEE1394 device 76, the image process accelerator 44, and the image skew detection accelerator 43.

The operation panel 52 is connected to the ASIC 66 of the controller board 60. Moreover, the SB 73, the NIC 74, the USB device 75, the IEEE1394 device 76, the image process accelerator 44, and the image skew detection accelerator 43 are connected to the NB 62 by the PCI bus.

Moreover, the engine 71 and the plotter 72 are connected to the ASIC 66 of the controller board 60 by the PCI bus. In addition, the LM 64 and the HDD 65 are connected to the ASIC 66 of the controller board 60, and the CPU 61 and the ASIC 66 are connected through the NB62 of the CPU chip set.

Thus, if the CPU 61 and the ASIC 66 are connected through NB62, when the interface of the CPU 61 is not exhibited, it can respond. Moreover, it does not connect through the PCI bus and the ASIC 66 and the NB 62 are connected through the AGP (accelerated graphics port) 67.

Thus, in order to carry out execution control of the one or more processes which form the application layer 5 and the platform layer 6 of FIG. 2, the ASIC 66 and the NB 62 are connected through the AGP 67 instead of the low-speed PCI bus, thereby preventing the deterioration of the performance.

The CPU 61 performs control of the whole multi-function peripheral system 1. The CPU 61 performs starting and execution of any of the network control service 34, the screen control service 33, the authentication control service 35, the document control service 36, the system-control service 38, the image memory handler 41, the image skew detection unit 31, and the image process unit 32 as a process running on the OS, respectively, and performs starting and execution of any of the copier-application 22, the Web page application 25, and the SOAP communication application 26 which form the application layer 5.

The NB 62 is the bridge for connecting the CPU 61, the system memory 63, the SB 73 and the ASIC 66.

The system memory 63 is the main memory used as memory for drawing of the multi-function peripheral system 1 etc.

The SB 73 is the bridge for connecting the NB 62, the PCI bus and the peripheral device.

Moreover, the LM 64 is the memory used as the image buffer and the image code buffer for copying.

The ASIC 66 is the intergrated circuit (IC) for the image processing which has the hardware elements for the image processing. The HDD 65 is the storage device for accumulation of the images, accumulation of the document data, accumulation of the programs, accumulation of the font data, accumulation of forms, etc.

Moreover, the operation panel 52 is the operation unit which provides the display information to the user and receives the input operations from the user.

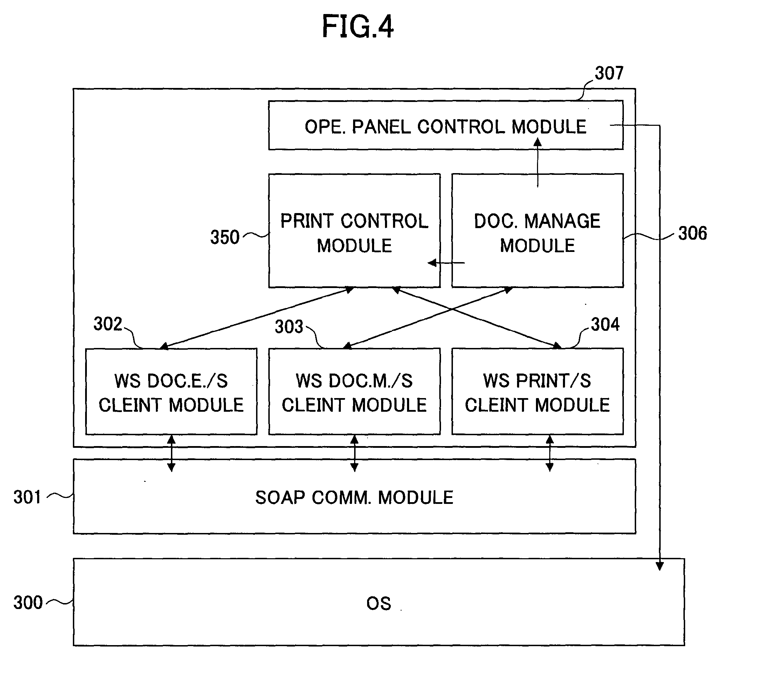

Next, the software composition of the client 102 shown in in FIG. 1 will be explained using FIG. 4.

The software of the client 102 comprises the OS 300, the SOAP communication module 301, the WS document edit service client module 302, the WS document management service client module 303, the WS printing service client module 304, the printing control module 305, the document management module 306, and the DCM 307.

The OS 300 is the operating system of the client 102. The SOAP communication module 301 performs the SOAP communication with the multi-function peripheral system. The WS document edit service client module 302 is the client module corresponding to the WS document edit service 131 mentioned later.

The WS document management service client module 303 is the client module corresponding to the WS document management service 132 mentioned later.

The document management module 306 is the module which manages the document in the client 102. The WS printing service client module 304 is the client module at the time of carrying out printing by using the multi-function peripheral system.

The printing control module 305 is the module which controls the processing in the client at the time of printing using the multi-function peripheral system.

The document management module 306 is the module which manages the document in the client. The DCM 307 is the module which controls what is displayed on the screen of the client.

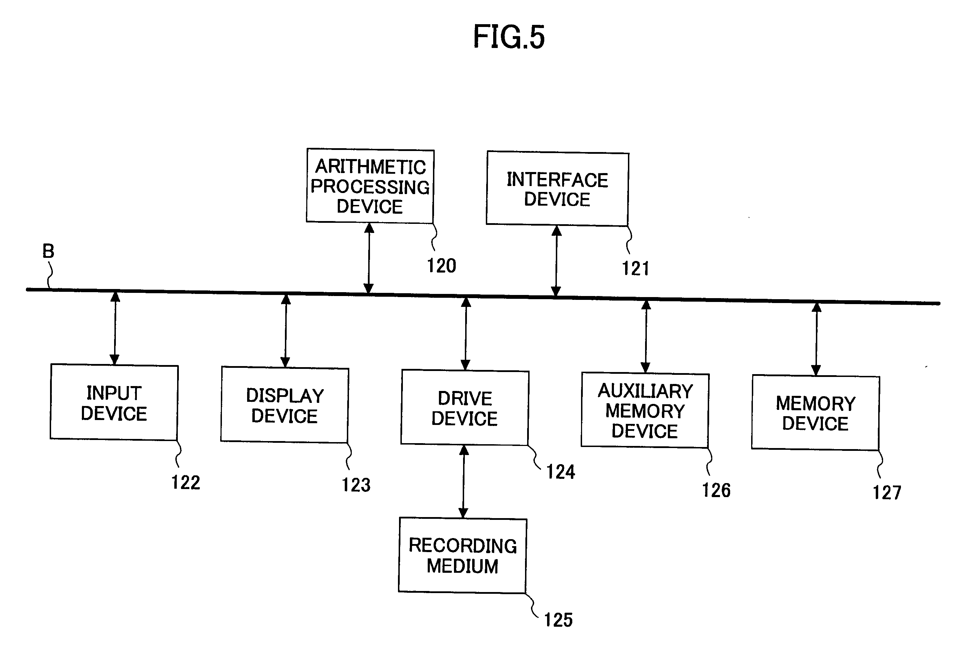

Next, the hardware composition of the client 102 will be explained using FIG. 5.

As shown in FIG. 5, the hardware composition of the client 102 includes the input unit 122, the display 123, the drive device 124, the recording medium 125, the auxiliary memory 126, the memory device 127, the processing unit 120, and the interface device 121, which are interconnected by the bus B.

The input unit 122 consists of the keyboard, the mouse, etc., and it is used in order to input various operation signals into the computer system. The display 123 displays the various windows, data, etc. required to operate the computer system.

The interface device 121 is the interface for connecting the computer system or other devices to the network. The interface device 121 includes, for example, the NIC, the modem, the USB (universal serial bus) device, etc.

And the program for operating the computer system is provided by the recording medium 125, such as CD-ROM, or is downloaded through the network.

Moreover, the recording medium 125 is placed in the drive device 124, and the data and the program are installed in the auxiliary memory 126 through the drive device 124 from the recording medium 125.

The auxiliary memory 126 stores the data and the program and stores the necessary files etc. The memory device 127 reads and stores the program from the auxiliary memory 126 upon power up of the computer system. The processing unit 120 performs processing according to the program read and stored in the memory apparatus 127.

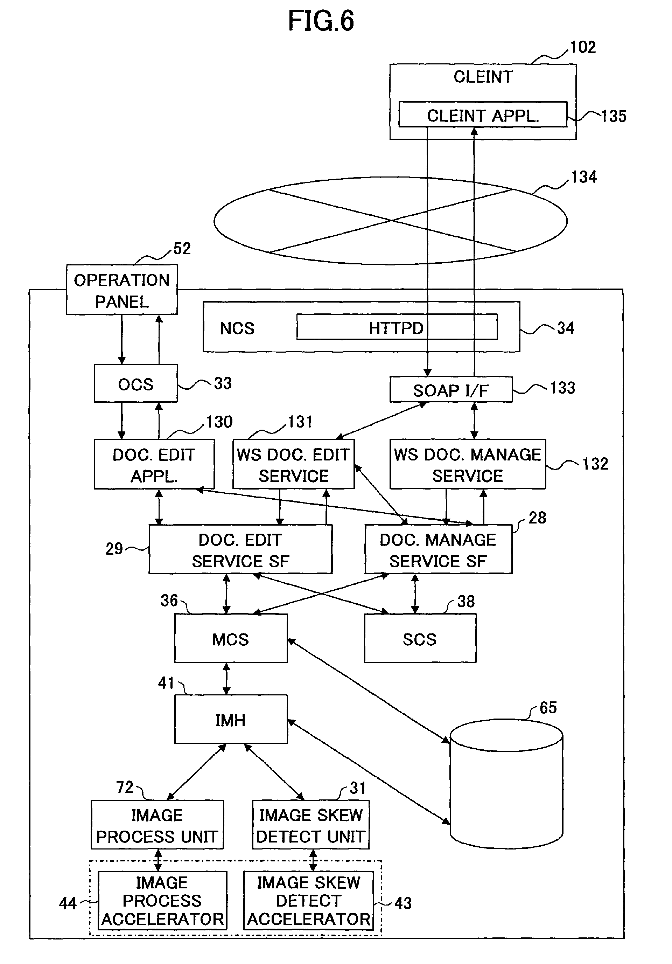

Next, the software composition which performs the processing concerning the document edit processing in the multi-function peripheral system 1 will be explained using FIG. 6.

As shown in FIG. 6, the software composition of the multi-function peripheral system 1 comprises the network control service 34, the operation panel 52, the screen control service 33, the SOAP I/F 133, the document edit application 130, the document edit service SF 29, the document management service SF 28, the system-control service 38, the document control service 36, the image memory handler 41, the image process unit 32, the image skew detection unit 31, the image process accelerator 44, the image skew detection accelerator 43, the WS document edit service 131, the WS document management service 132, and the HDD 65.

In addition, the WS document edit service 131 and the WS document management service 132 belong to the WSF 27.

Moreover, the document edit application 130 has the same composition as the copier application 22. The WS document management service 132 corresponds to the document-related information supply unit. The WS document edit service 131 corresponds to the edit execution unit, the edit state notification unit, the edit content information acquisition unit, the edit job information creation unit, the edit content information storing unit, and the edit job execution unit.

The SOAP I/F 133 is contained in the SOAP communication application 26 and provides the interface of SOAP. The document edit application 130 is the application for performing image edit from the operation panel 52.

The WS document edit service 131 is the service module for performing image edit through communication.

The WS document management service 132 manages the document in HDD 65, and provides the document management service through communication.

The document edit service SF 28 is the shared function which is used by the WS document edit service 131. The document management service SF 28 is the shared function which is used by the WS document management service 132.

Moreover, in FIG. 6, the network 134 which connects the client 102 and the multi-function peripheral system, and the client application 135 which is contained in the client 102 are illustrated. The client application 135 is the application program used when the document editing operation is carried out by the client 102.

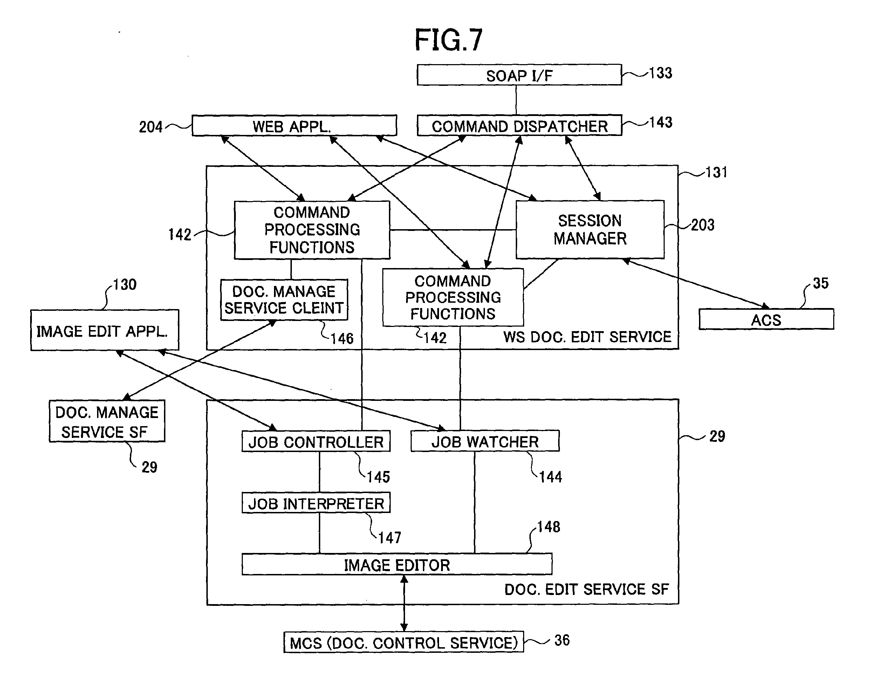

Next, the details of the WS document edit service 131 and the document edit service SF 29 will be explained using FIG. 7.

As shown in FIG. 7, the WS document edit service 131 comprises the document management service client 146 (which is called the RC 146), the command processing functions 142, and the session manager (SM) 203.

Moreover, the document edit service SF 29 comprises the job controller (JC) 145, the job interpreter (JI) 147, the job watcher (JW) 144, and the image editor (IE) 148.

In addition, in FIG. 6, the command dispatcher (CD) 143, the Web application 204, the authentication control service (ACS) 35, the document edit application 130, the document management service SF 28, and the document control service 36 are shown.

The CD 143 interpretes the command requested from the client application 135 and sends the command to the SM 203 and the command processing functions 142.

The Web application 204 the Web page it is the application contained in the application 25, and is the application used when the client uses the web browser.

The command processing functions 142 are the set of functions which processes the command supplied from the service.

The SM 203 manages the session. The RC 146 is the module which communicates with the document management service SF 28 in the same device, and uses the document management service shared function.

The JC 145 receives the command which went via the CD 143, and controls creation of the edit job instruction, the setup of the edit information on the edit job instruction, creation of job, execution of job, and cancellation of job.

The JW 144 supervises job managed using the queue within IE 148, and answers the job information in the reference of the job state, and the reference command of the job result.

The JI 147 interprets job received from JC 145, creates the job for every page, and the plane job for CMYK each color plane of every, and creates the editing operation job corresponding to the editing operation of further each.

The IE 148 performs in order each edit job connected to the plane job to the corresponding plain image with reference to the plane job of the head of the queue managed by JI 147, and attains image edit processing.

Moreover, the state of the plane job is updated according to the situation of edit processing.

Next, the processing which is performed between the WS document management service 132, the WS document edit service 131, the document control service 36, the image memory handler 41, and the client 102 will be explained.

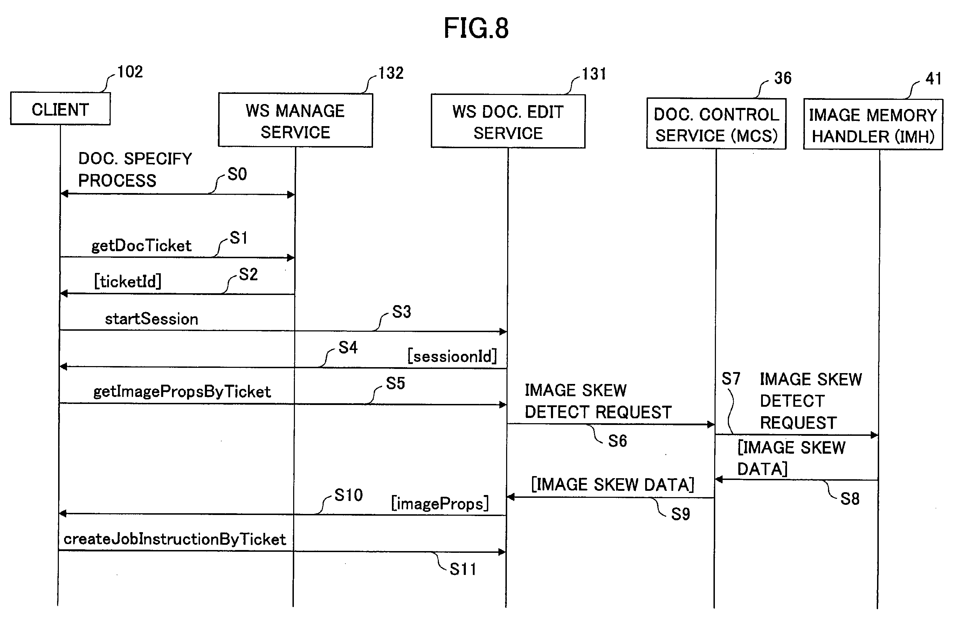

FIG. 8 is a sequence diagram for explaining the processing in which the client is supplied with the image skew information of the document image.

At step S0, the client 102 specifies the document of interest, which corresponds to the document specifying step.

At step S1, the client 102 notifies the command getDocTicket to the WS document management service 132. This command requests receiving of the ticket required for subsequent processings.

At step S2, the WS document management service 132 notifies the ticket ID ticketId to the client 102.

At step S3, the client 102 notifies the command startSession to the WS document edit service 131. This comand requests the starting of the session.

At step S4, the WS document edit service 131 notifies the session ID sessionId to the client 102.

At step S5, the client 102 notifies the command getImagePropsByTicket to the WS document edit service 131. This command requests the receiving of the image skew information in the document image.

At step S6, the WS document edit service 131 notifies the image skew information request to the document control service 36.

At step S7, the document control service 36 notifies the request of the image skew information of the document image to the image memory handler 41.

At step S8, the image memory handler 41 notifies the image skew information to the document control service 36.

At step S9, the document control service 36 notifies the image skew information to the document edit service 131.

At step S10, the document edit service 131 notifies the image property "imageProps" to the client 102, which corresponds to the document-related information supplying step. This is the document-related information, such as the image skew information described above.

At step S11, the client 102, which receives the image skew information, notifies the command "createJobInstructionByTicket" to the document edit service 131. This command requests the creation of the edit job instruction to correct the image skew in the document image.

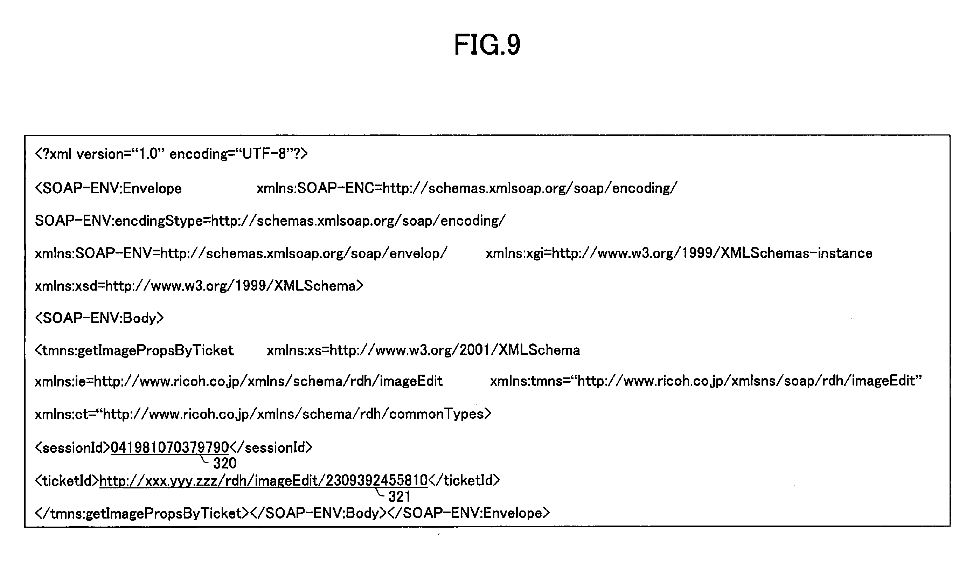

The content of the command notified at step S5 in the sequence diagram of FIG. 8 will be explained using FIG. 9.

As shown in FIG. 9, the command "getImagePropsByTicket" contains the session ID 320 and the ticket ID 321 which are acquired by the client 102.

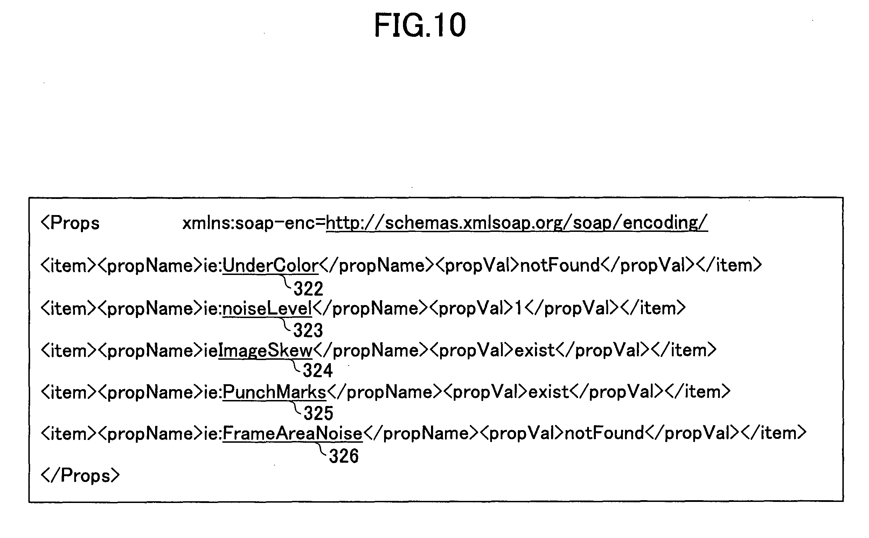

Next, a description will be given of the content of the information that is notified at step S10 in the sequence diagram of FIG. 8 using FIG. 10.

As shown in FIG. 10, the information related to the imageProps includes "UnderColor", "noiseLebel", "ImageSkew", "PunchMarks", and "FrameAreaNoise". The "UnderColor" indicates the presence of a background level in the document image, and this information is notified with the image by "not found" or "exist". The "noiseLebel" indicates the noise level, and this information is notified with the image by the noise level numeral value "0" to "10". The noise level becomes high as the noise level value increases. The noise level value "0" indicates that there is no noise in the image.

Moreover, the "ImageSkew" indicates the presence of a distortion in the document image, and this information is notified with the image by "not found" or "exist". If the "ImageSkew" is "not found", then it is notified that there is no distortion in the image. If the "Image Skew" is "exist", then it is notified that there is a distortion in the image.

Moreover, the "PunchMarks" indicates the presence of punch marks in the image, and this information is notified with the image by "not found" or "exist". If the "PunchMarks" is "not found", then it is notified that there is no punch marks in the image. If the "PunchMarks" is "exist", then it is notified that there are punch marks in the image.

Moreover, the "FrameAreaNoise" indicates the presence of noise in the frame areas of the image, and this information is notified with the image by "not found" or "exist". If the "FrameAreaNoise" is "not found", then it is notified that there is no noise in the frame areas of the image. If the "FrameAreaNoise" is "exist", then it is notified that there is a noise in the frame areas of the image.

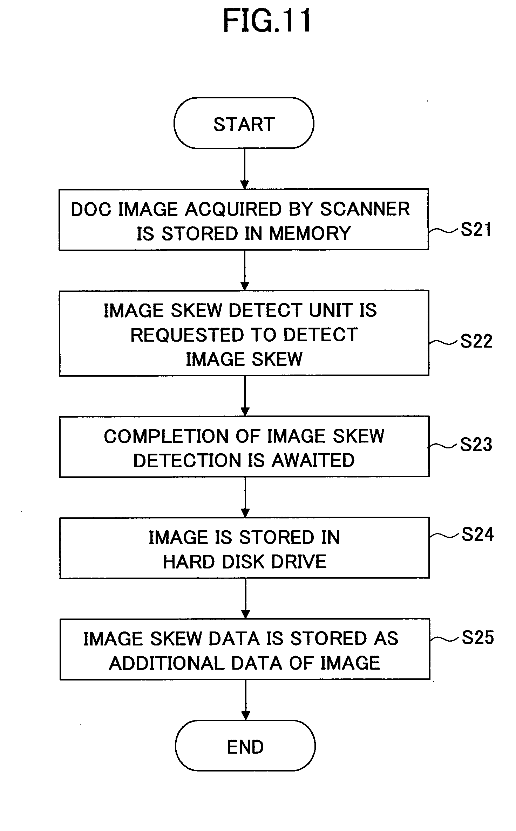

A description will be given of the processing to detect the image skew of the document image using the flowchart of FIG. 11.

As in the flowchart of FIG. 11, at step S21, the image memory handler 41 writes the acquired document image in the scanner to the memory.

At step S22, the image memory handler 41 requests the detection of the image skew of the document image on the memory to the image skew detection unit.

At step S23, the image memory handler 41 is in a waiting condition for the completion of detection.

At step S24, the image memory handler 41 stores the document image in the HDD.

At step S25, the image memory handler 41 stores the image skew information in the HDD as bibliographic information of the document image.

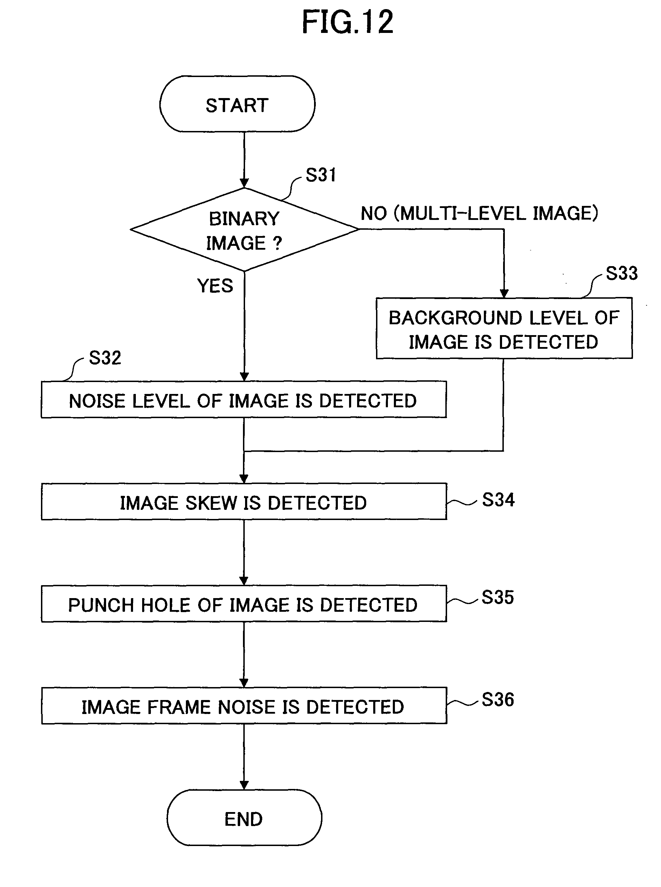

Next, the processing which detects the noise level, the background level, the image skew (or image distortion), the punch marks, and the frame area noise will be explained using the flowchart of FIG. 12.

At step S31, the image skew detection unit 31 determines whether the document image is a binary image.

When the result at the step S31 is affirmative (binary image), the image skew detection unit 31 detects at step S32 the noise level of the document image. This detection can be carried out with, for example, the distribution of the connection pixel size of the document image.

When the result at the step S31 is negative (multi-level image), the image skew detection unit 31 detects at step S33 the background level of the document image. This detection can be carried out with, for example, the distribution on the basis of the pixel value level of the document image.

At step S34, the image skew detection unit 31 detects the image skew of the document image. This detection can be carried out with, for example, the accumulation pixel value distribution of the main scanning direction and the sub-scanning direction when given skew angles are supposed.

At step S35, the image skew detection unit 31 detects the punch marks in the document image. This detection can be carried out by performing pattern matching between the document image and the reference punch-mark image, for example.

At step S36, the image skew detection unit 31 detects the noise in the frame area of the document image. This detection can be carried out with, for example, the accumulation pixel value distribution of the main scanning direction and the sub-scanning direction, which is limited to the frame area of the document image.

The thus detected document-related information will be displayed on the client 102.

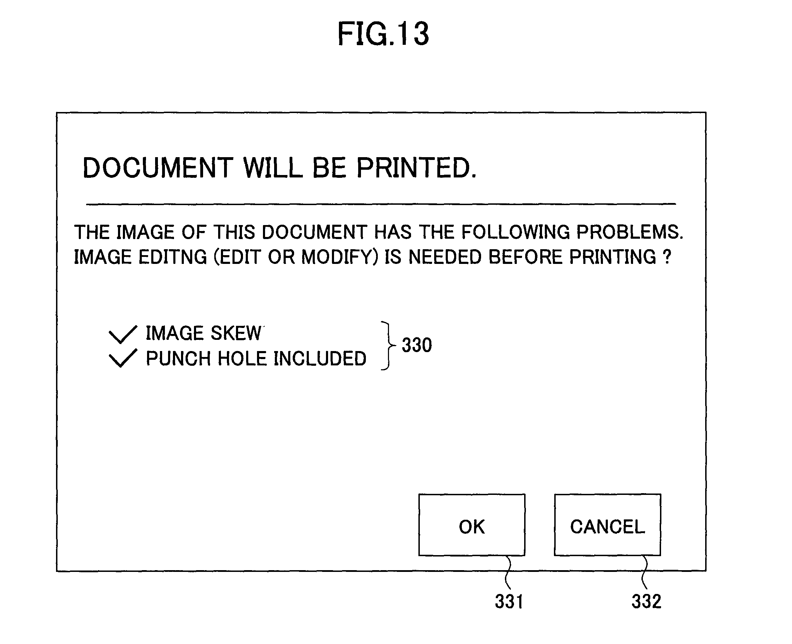

FIG. 13 shows the user interface of the client 102 at that time.

As in the display screen of FIG. 13, the detection information 330, the O.K. button 331, and the cancellation button 332 are provided. In the detection information 330, the result of the detection is given, and the check box is checked when editing or correcting the document-related problem, if any, is needed.

The O.K. button 331 is clicked by the user when printing is requested, and the cancellation button 332 is clicked by the user when printing is not requested.

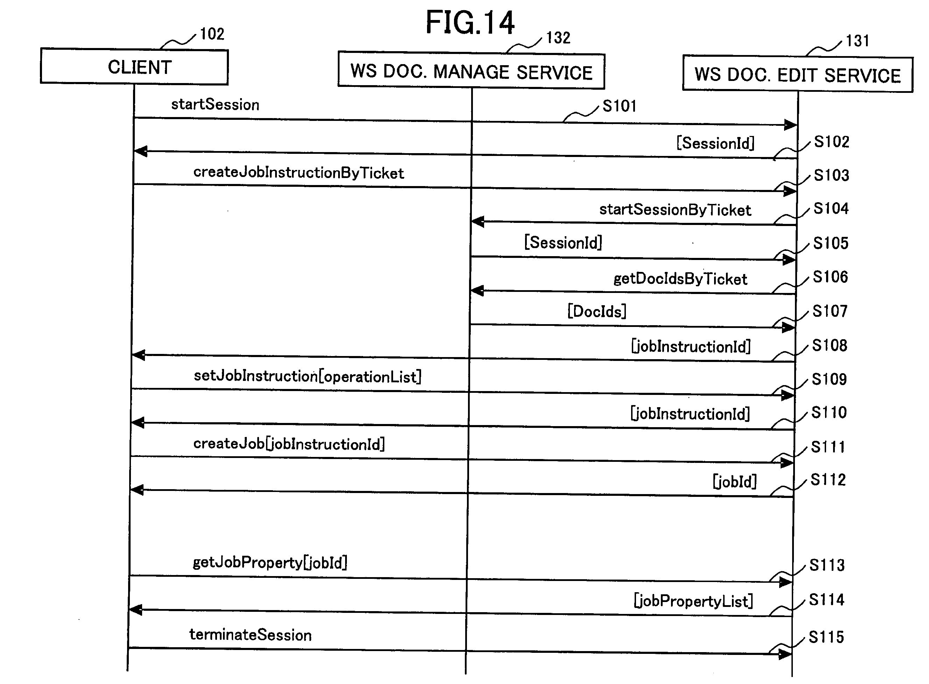

Next, a description will be given of the processing performed between the client 102, the WS document management service 132 and the WS document edit service 131, with reference to FIG. 14.

The sequence diagram of FIG. 14 is to explain the processing of the client to edit the image data of the document of interest and receive identification the edit job instruction from the image processing apparatus.

At step S101, the client 102 notifies the command startSession which requests the start of the session to the WS document edit service 131.

At step S102, the WS document edit service 131 notifies the Session ID to the client 102.

At step S103, the client 102 notifies the command createJobInstructionByTicket which requests creation of the edit job instruction to the WS document edit service 131. This edit instruction corresponds to the content of the edit information.

At step S 104, the WS document edit service 131 notifies the command startSessionByTicket which requests Session ID to the WS document management service 132.

At step S 105, the WS document management service 132 notifies the Session ID to the WS document edit service 131.

At step S106, the WS document edit service 131 notifies the command getDocIdsByTicket which requests the document ID of the document of interest.

At step S107, the WS document management service 132 notifies the DocIds to the document edit service 131.

At step S108, the WS document edit service 131 notifies the command jobInstructionId to the client 102.

At step S109, the client 102 notifies the command SetJobInstruction which sets edit operation information in the image edit job instruction, to the WS document edit service 131 together with the operation list made into the edit job.

At step S110, the WS document edit service 131 notifies the job instruction ID JobInstructionId to the client 102.

At step S111, the client 102 notifies, together with the JobInstructionId, the command createJob which carries out execution of the image edit job creation, to the WS document edit service 131.

At step S112, the WS document edit service 131 notifies the job ID jobId to the client 102.

At step S 113, the client 102 notifies the command getJobProperty which requests the receiving of the state of the edit job, to the WS document edit service 131 together with the jobId.

At step S114, the WS document edit service 131 notifies the job property list jobPropertyList to the client 102.

At step S 115, the client 102 notifies the command terminateSession which ends the session to the WS document edit service 131 so that the session is terminated.

Apart from the above-mentioned commands, there are the command getProps which acquires the property of the document image, and the command unlockObject which performs the unlock request of the document, which are transmitted between the client 102 and the document management service 132.

Moreover, there is the command cancelJob which requests cancellation of the image edit job, and this command is transmitted between the client 102 and the document edit service 131.

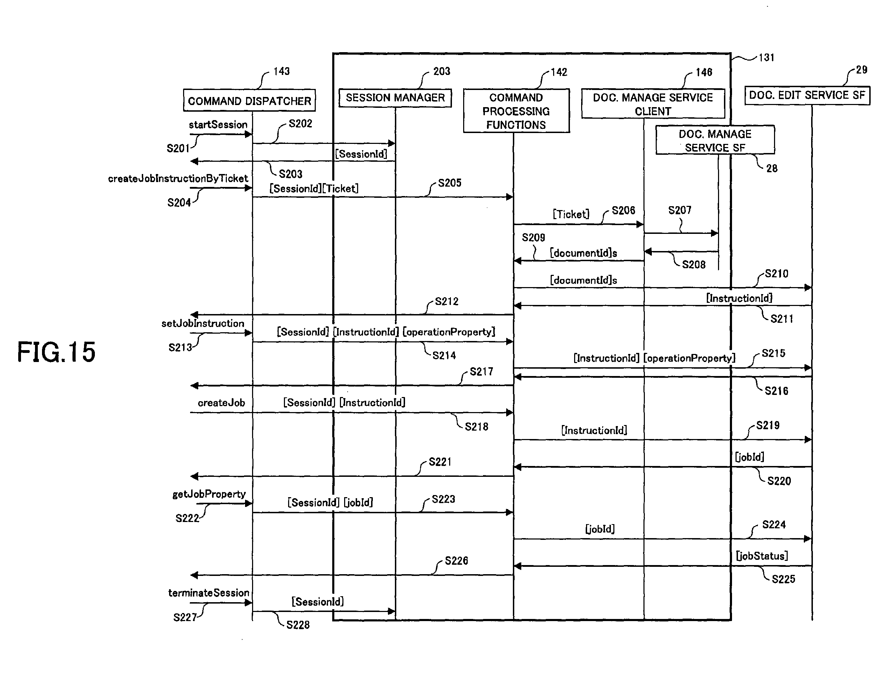

Next, FIG. 15 is a sequence diagram for explaining the processing of the WS document edit service 131.

The sequence diagram of FIG. 15 illustrates the sequences of communications between the document management service SF 28, the document edit service SF 29, the CD 143, the SM 203, the command processing functions 142, and the RC 146.

At step S201, the client 102 notifies the command startSession to the CD 143. At step S202, the CD 143 notifies the startSession to the SM 203.

At step S203, the SM 203 notifies the SessionId to the client 102.

At step S204, the client 102 notifies the command create Job Instruction By Ticket which requests creation of the edit job instruction, to the CD 143.

At step S205, the CD 143 notifies the Session ID and the ticket to the command processing functions 142.

At step S206, the command processing functions 142 notify the ticket to the RS 146.

At step S207, the RS 146 sends the inquiry to the document management service SF 28. At step S208, the document management service SF 28 notifies the document IDdocumentId to the RS 146 in response to the inquiry.

At step S210, the command processing functions 142 notify the document ID to the document edit service SF 29. The document edit service SF 29 at this time creates a new edit job instruction for containg edit operation information which is created when the document is edited at the client 102.

At step S211, the document edit service SF 29 notifies InstructionId, which is specific ID of the created edit job instruction, to the command processing functions 142.

At step S212, the command processing functions 142 notify the InstructionId to the client 102.

At step S213, the client 102 notifies the command SetJobInstruction which requests setting of the edit operation information in the edit job instruction, to the CD 143.

At step S214, the CD 143 notifies Session ID, InstructionId, and OperationProperty to the command processing functions 142. In addition, the OperationProperty is the edit operation information and corresponds to the edit content information.

At step S215, the command processing functions 142 notify the OperationProperty and the InstructionId to the document edit service SF 29. The document edit service SF 29 adds the OperationProperty to the edit job instruction corresponding to the notified InstructionId, so that the edit job instruction is updated.

At step S216 and step S217, the client 102 is notified that the OperationProperty is added to the edit job intruction.

At step S218, the client 102 notifies the command createJob which requests creation of the actual edit job based on the edit job instruction, to the command processing functions 142.

At step S219, the command processing functions 142 notify the InstructionId to the document edit service SF 29. The document edit service SF 29 creates the edit job.

At step S220 and step S221, jobId which is specific ID of the edit job, is notified to the client 102. Using the jobId, the client 102 notifies at step S222 the command getJobProperty which requests receiving of the state of the edit job, to the CD 143.

At step S223, the CD 143 notifies the Sessions ID and the jobId to the command processing functions 142.

At step S224, the jobId is notified to the document edit service SF 29 from the command processing functions 142.

At step S225, the document edit service SF 29 notifies the jobStatus which indicates the state of the edit job, to the command processing functions 142. At step S226, the jobStatus is notified to the client 102.

At step S227, the client 102 notifies the command terminateSession which request termination of the session, to the CD 143. At step S228, the CD 143 notifies the Session ID to the SM 203.

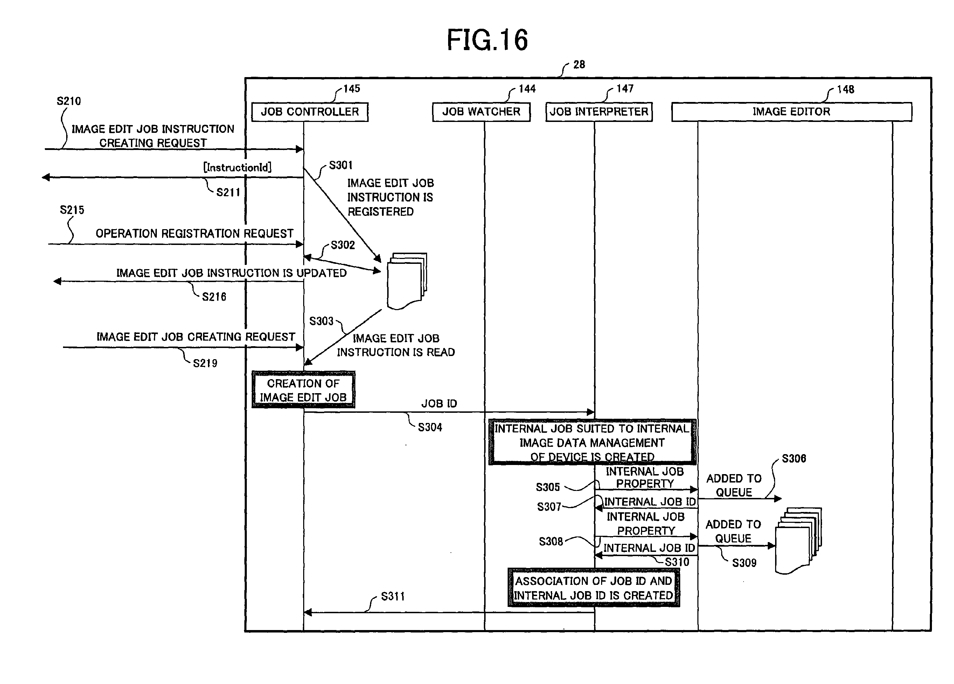

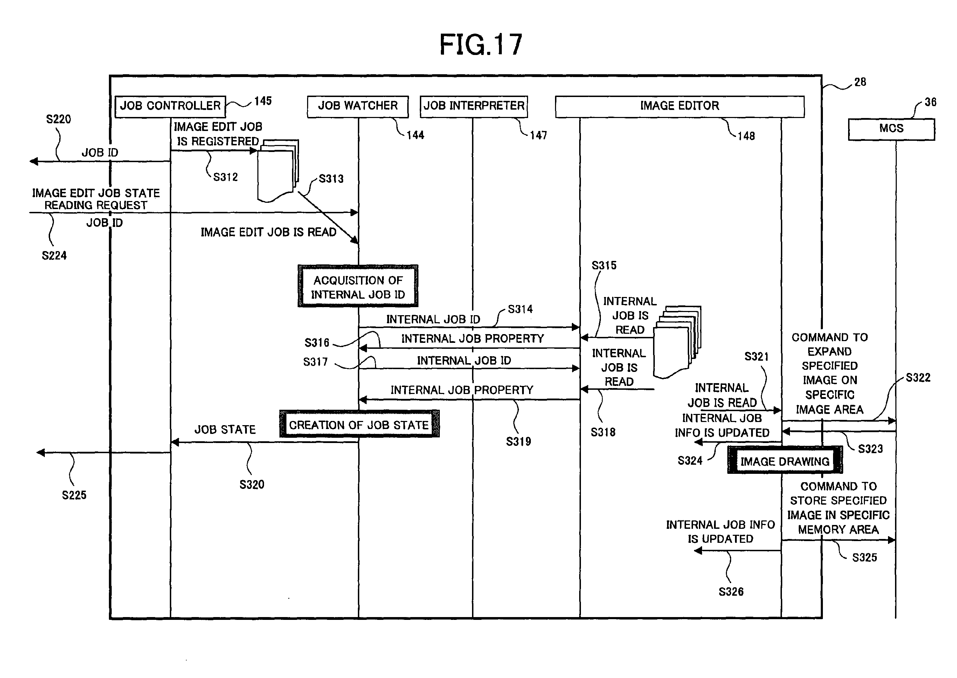

Next, the processing of the document edit service SF 28 in the above-described sequence diagram will be explained using FIG. 16 and FIG. 17.

The sequence diagrams of FIG. 16 and FIG. 17 are to explain the sequences of communications between JC 145, JW 144, JI 147 and IE 148 in the document edit service SF 28. Moreover, reference numeral S2xx in FIG. 16 and FIG. 17 indicates the corresponding step in the sequence diagram of FIG.15.

As shown in FIG. 16, JC 145 to which documentId is notified at step S210, registers at step S301 the edit job instruction (which corresponds to the edit job information creation step). At step S211, JC 145 notifies InstructionId to the client 102.

JC 145 to which the OperationProperty and the InstructionId are notified at step S215, adds, at step S302 (corresponding to the edit content information storing step), the OperationProperty to the edit job instruction, so that the edit job instruction is updated.

When the update is performed, JC 145 notifies at step S216 to the client 102 of the addition of the OperationProperty to the edit job instruction.

JC 145 to which the InstructionId is notified at step S219 creates at step S303 the edit job by reading the edit job instruction corresponding to the Instruction-Id.

At step S304, JC 145 notifies Job ID to JI 147. JI 147 to which the Job ID is notified reconstructs the edit job suited to the image information management inside the device.

At step S305, JI 147 notifies the internal job property to IE 148. At step S306, IE 148 adds the internal job property to the queue. At step S307, IE 148 notifies the internal job ID to JI 147. Similarly, at steps S308, S309 and S310, JI 147 notifies the internal job property to IE 148, IE 148 adds the internal job property to the queue, and IE 148 notifies the internal job ID to JI 147. In JI 147, the association of the received internal job ID and the edit job ID is created.

At step S311, JI 147 notifies the creation of the edit job to JC 145.

Referring to FIG. 17, at step S312, JC 145 registers the edit job. At step S220, JC 145 notifies the Job ID to the client 102.

At step S313, JW 144 which receives the jobId at step S224 acquires the internal job ID by reading the edit job.

At step S314, JW 144 which receives the internal job ID notifies the internal job ID to IE 148.

At step S315, IE 148 reads the internal job. At step S316, IE 148 notifies the internal job property to JW 144. Similarly, at steps S317, S318 and S319, JW 144 notifies the internal job ID to IE 148, IE 148 reads the internal job, and IE 148 notifies the internal job property to JW 144.

JW 144 which receives the internal job property creates the state of the edit job. At step S320, JW 144 notifies the state of the edit job to JC 145. At step S225, the state of the edit job is notified to the WS document edit service 131.

The processing of the above-described steps S313 to S320 corresponds to the edit job state notification step.

Apart from the above processing, IE 148 performs image drawing according to the job.

At step S321, IE 148 reads the internal job. At step S322, IE 148 sends an instruction to develop the specified document image on the specified memory, to the document control service 36.

At step S323, the document control service 36 notifies the response to the instruction to IE 148. At step S324, IE 148 updates the internal job information. In this manner, the image drawing is performed.

At step S325, IE 148 sends an instruction to store the specified document image in the memory area, to the document control service 36. At step S326, IE 148 updates the internal job information.

The processing of the above-described steps S321 to S325 corresponds to the edit job execution step.

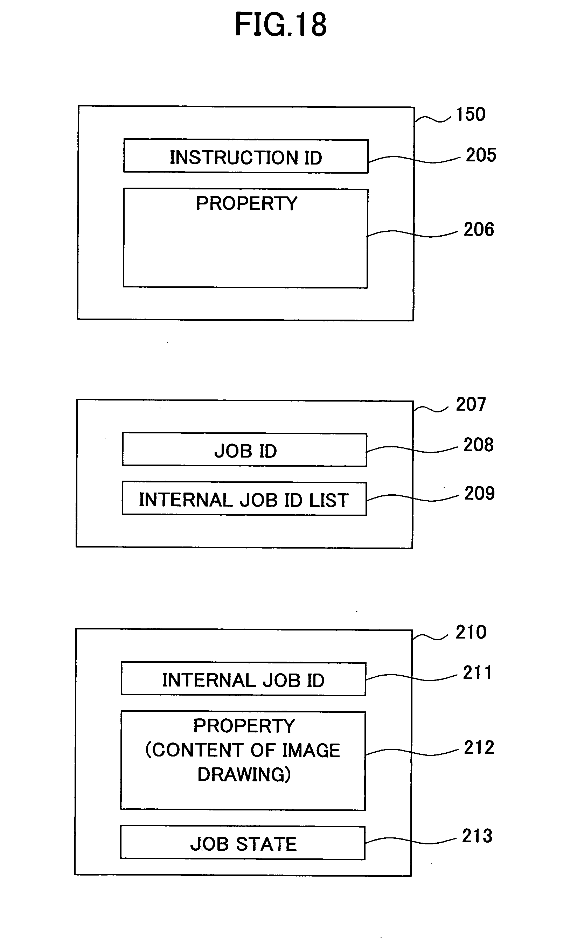

Next, the contents of the data of the edit job instruction, the edit job, and the internal edit job will be explained using FIG. 18.

FIG. 18 is a diagram for explaining the respective data struction of the edit job instruction 150, the edit job 207, and the internal edit job 210.

As shown in FIG. 18, the edit job instruction 150 includes InstructionId 205 and property 206 as data. The InstructionId 205 is specific ID of the edit job instruction, as mentioned above. The property 206 includes as data both or either of the document-ID and the page number, the edit content information, the region coordinate information for the image edit, and the optional information, such as thickness of the line.

The edit job 207 includes jobId 208 and InternalJobIdList 209 as data. The jobId 208 is specific ID of the edit job. The InternalJobIdList 209 is a list of internal edit jobs 210 explained below.

The internal edit job 210 includes InternalJobId 211, property 212, and jobStatus 213 as data. The InternalJobId 211 is specific ID of the internal edit job. The property 212 indicates the contents of image drawing. The jobStatus 213 indicates the state of the edit job.

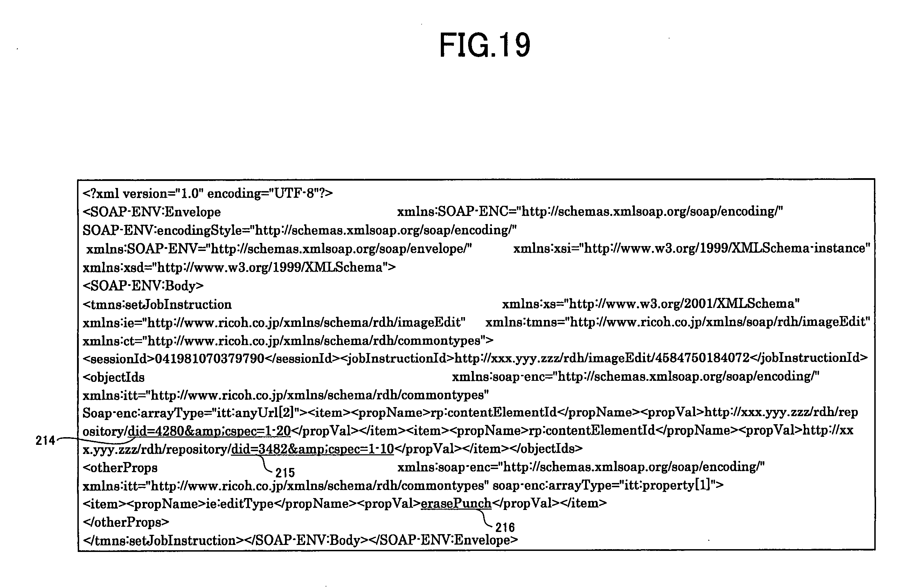

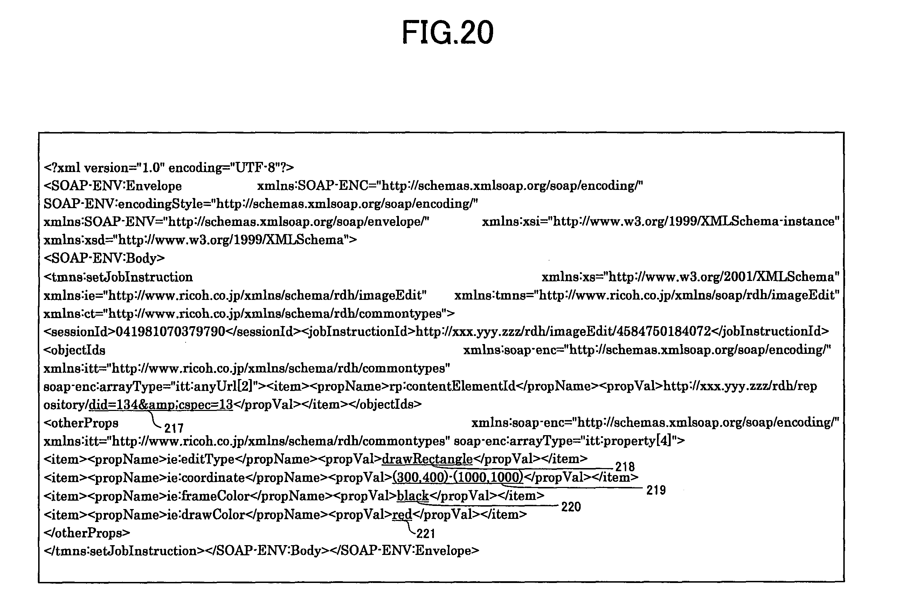

Next, some examples of the edit job instruction creation request notified from the client 102 will be explained using FIG. 19 and FIG. 20.

In the example of the edit job instruction creation request in FIG. 19, the client 102 requests creation of the edit job instruction of eliminating the punch marks currently present on the images on 1-20 pages in the document of document number 4280 and 1-10 pages in the document of document number 3482.

Specifically, the request portion 214 correspond to the 1-20 pages in the document of document number 4280, the request portion 215 corresponds to the 1-10 pages in the document of document number 3482, and the request portion 216 corresponds to the instruction of eliminating the punch marks as shown in FIG. 19.

In the example of FIG. 20, the client 102 requests creation of the edit job instruction of drawing a rectangle with the black frame and the red inside in the region of (300, 400) - (1000, 1000) of the image on page 13 in the document of document number 134.

Specifically, the request portion 217 corresponds to the page 13 of the document of document number 134, the request portion 218 corresponds to drawing of a rectangle, the request portion 219 corresponds to the region (300, 400) - (1000, 1000), the request portion 220 corresponds to the black frame, and the request portion 221 corresponds to the red inside as shown in FIG. 20.

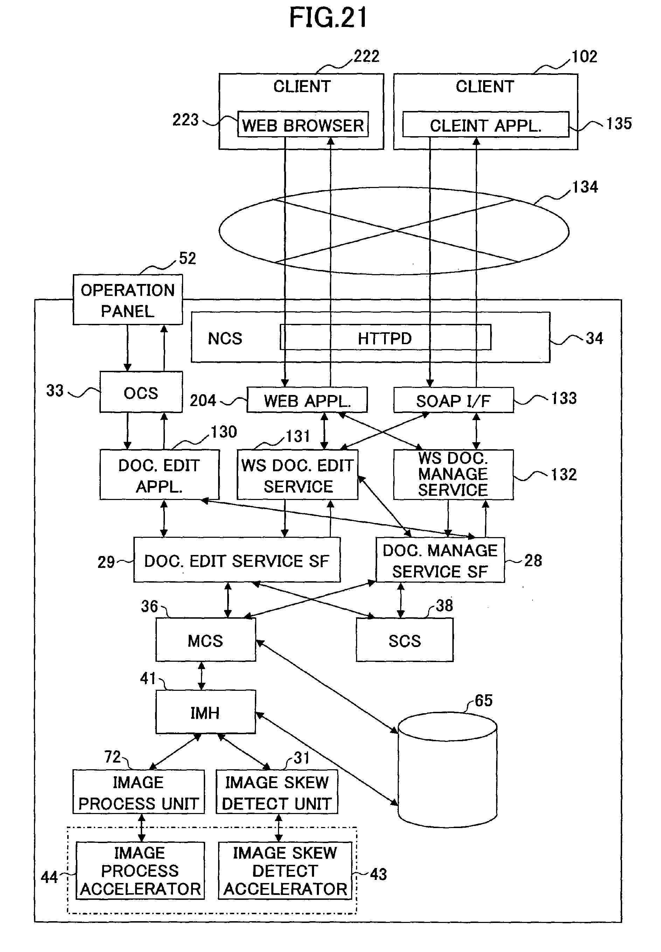

Next, FIG. 21 shows the software composition of the multi-function peripheral system 1 when the client 222 uses the web browser instead of the client application 135 of the client 102 and performs document editing operation by selecting the known edit job instruction.

In the software block diagram of FIG. 21, the client 222 corresponding to the edit terminal and having the web browser 223 is added to the software block diagram of FIG. 6 in which the client 102 with the client application 204 is also provided.

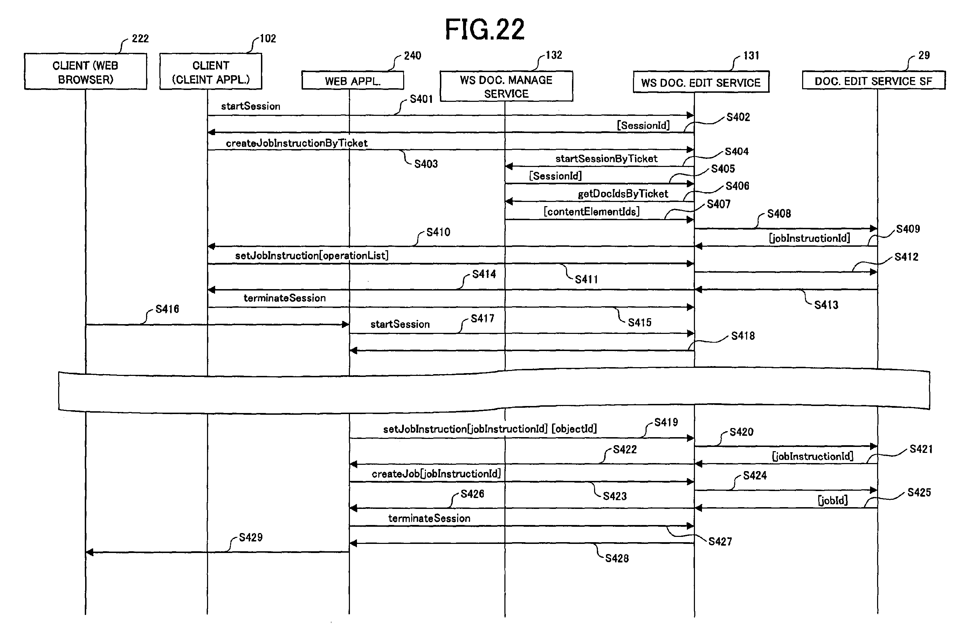

The processing in this case will be explained using the sequence diagram of FIG. 22. In the sequence diagram of FIG. 22, it is supposed that the edit job instruction is created by the client 102, and the document edit processing is performed with the client 222 by using the known edit job instruction.

At step S401, the client 102 notifies the command startSession which requests the start of the session to the WS document edit service 131.

At step S402, the WS document edit service 131 notifies SessionID to the client 102.

At step S403, the client 102 notifies the command createJobInstructionByTicket which requests creation of the edit job instruction, to the WS document edit service 131.

At step S404, the WS document edit service 131 notifies the command startSessionByTicket which requests receiving of the Session ID, to the WS document management service 132.

At step S405, the WS document management service 132 notifies the Session ID to the WS document edit service 131.

At step S406, the WS document edit service 131 notifies the command getDocIdsByTicket which requests receiving of ID of the document, to the WS document management service 132.

At step S407, the WS document management service 132 notifies the contentElemetIds to the document edit service 131. This contentElemetIds indicates the components contained in some or all of the document. For example, the content element ID "DocNum=c101; tiff; raw; 200 dpi; p12" means that the image element on page 12 of the document of document number c101 has the resolution 200 dpi with no compression in "tiff" format.

At step S408, the WS document edit service 131 notifies the contentElemetIds to the document edit service SF 29. The document edit service SF 29 creates a new edit job instruction, and notifies jobInstructionId which is specific ID of the created edit job instruction to the command processing functions 142 at step S409.

At step S410, the jobInstructionId is notified to the client 102.

At step S411, the command SetJobInstruction which requests setting of the edit operation information in the edit job instruction is notified to the WS document edit service 131 by the client 102. This notification is sent at step S412 to the document edit service SF 29 by the WS document edit service 131.

The document edit service SF 29 adds the OperationProperty to the edit job instruction corresponding to the received jobInstructionId, so that the edit job instruction is updated.

At steps S413 and S414, the notification that the OperationProperty is added to the edit job instruction is sent to the client 102.

Next, the session will be terminated when the client 102 at step S415 notifies the command terminateSession which requests termination of the session, to the WS document edit service 131.

At the following step S416, the client 222 requests the Web application 204 to send the session starting command.

At step S417, the Web application 204 notifies the command startSession which requests the start of the session, to the WS document edit service 131.

At step S418, the WS document edit service 131notifies the SessionID to the Web application 204. Then, the client 22 receives the document of interest for being edited using the document management service SF, and receives the edit job instruction using the document edit service SF, but a description thereof will be omitted for the sake of convenience.

At step S419, the Web application 204 notifies SetJobInstruction to the WS document edit service 131 together with jobInstructionId and objected. This notification is sent at step S420 to the document edit service SF 29.

At steps S421 and S422, the jobInstructionId received from the document edit service SF 29 is notified to the Web application 204.

At the following step S423, the command createJob is notified to the WS document edit service 131 from the Web application 204, together with the jobInstructionId. This notification is sent at step S424 to the document edit service SF 29.

At step S425 and step S426, the jobId from the document edit service SF 29 is notified to the Web application 204.

At step S427, the Web application 204 notifies the command terminateSession to the WS document edit service 131.

At steps S428 and S429, the termination of the session is notified to the client 222 from the WS document edit service 131 via the Web application 204.

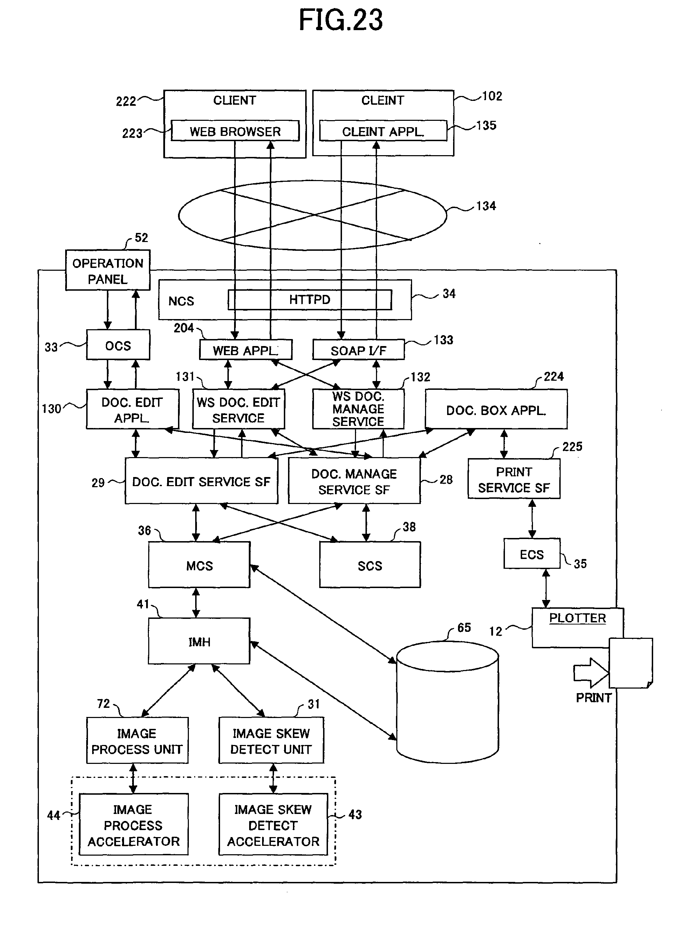

Next, the software composition in the case of printing the edited document image will be explained using FIG. 23.

In the software block diagram of FIG. 23, the document box application 224, the printing service SF 225, the ECS 35, and the plotter 12 corresponding to the printing unit are added to the software block diagram of FIG. 21.

This example shows that the document edit function can be easily given to other functions by dividing the document edit service into the shared function (SF) modules. It is possible to perform the image processing, including removing the punch marks from the document image by the setup at the time of printing, and attaching the arbitrary tag to a predetermined position of the document image and printing the same, by using the software composition of FIG. 21.

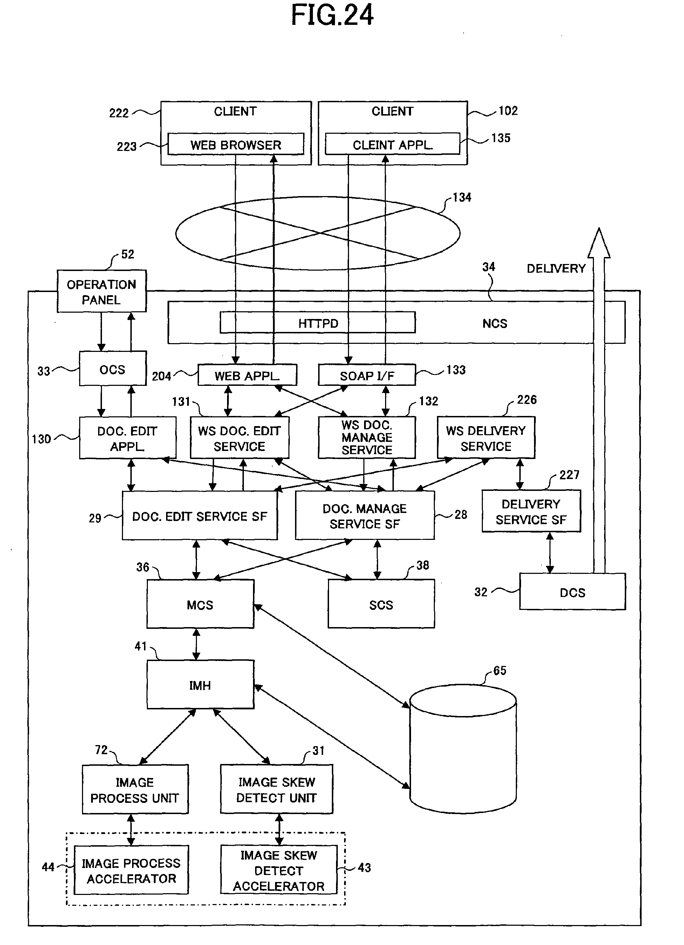

As another example, the software composition in the case of delivering the edited document image to another node in the network will be explained using FIG. 24.

With this distribution service, in the image, it is service of distributing by mail and DCS32 corresponding to the delivery unit is used for this service.

The DCS 32 is the module located in the control service layer 9. In the software composition of FIG. 24, the WS distribution service 226, the distribution service SF 227 and the DCS32 are added to the software composition of FIG. 21.

Also in this case, the document edit function can be easily given to other functions by dividing the document edit service into the SF modules.

As mentioned above, the document edit service SF is the module which provides the interface used in common to the programs including the Web application and the SOAP interface which are directed to different networks.

The required function can be used when other functions requiring the network communication, such as management of the session between the client and the service related to the document edit, by using the document edit service SF. This shows that hypertrophy of other functions, duplication of the function, etc. are avoidable.

Moreover, as mentioned above, the document edit service SF is used with the document management service in combination, and it is possible to provide a convenient function for the user who operates the client.

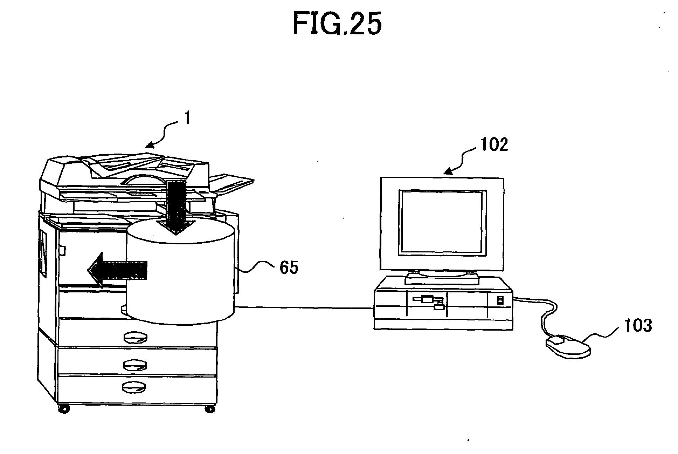

Next, the document edit system in another preferred embodiment of the invention will be explained using FIG. 25.

As shown in FIG. 25, the multi-function peripheral system 1 of the present embodiment, and the client 102 in which the document is edited are connected. The multi-function peripheral system 1 comprises the hard disk drive (HDD) 65 for accumulating document images. Moreover, the client 102 comprises the mouse 103 used for editing the document.

It is possible for the client 102 to edit the document of HDD 65 of the multi-function peripheral system 1 with such composition. In addition, the client 102 may be the personal computer as shown in FIG. 25, and it may be a cellular phone or PDA.

The software composition which performs document edit processing in the document edit system of FIG. 25 is the same as the software composition shown in FIG. 6.

The WS document edit service 131 and the WS document management service 132 belong to the WSF 27 as shown in FIG. 6.

The SOAP communication which SOAP I/F133 mentioned above it is contained in the application 26 and is the interface of SOAP document edit the application 130 is the application for performing image edit from the operation panel 52.

The WS document edit service 131 is service for performing image edit through communication. The WS document management service 132 manages the document in HDD 65, and supplys the document management service through communication.

The document edit service SF 29 is the shared function used by the WS document edit service 131. The document management service SF 28 is the shared function used by the WS document management service 132.

Moreover, in FIG. 6, the network 134 which connects the client 102 and the multi-function peripheral system, and the client client application 135 contained in the client 102 are illustrated. The client application 135 is the application used when the document editing task is carried out by the client 102.

In addition, the edit operation information receiving unit and the edit reflection unit correspond to the WS document edit service 131.

The document-related information creation unit, the document storage unit, the document-related information supply unit, the document list information supply unit, the bibliographic information supply unit, and the reduced image data creation unit correspond to the WS document management service 132.

Next, the details of WS document management service 132 and WS document edit service 131 are explained.

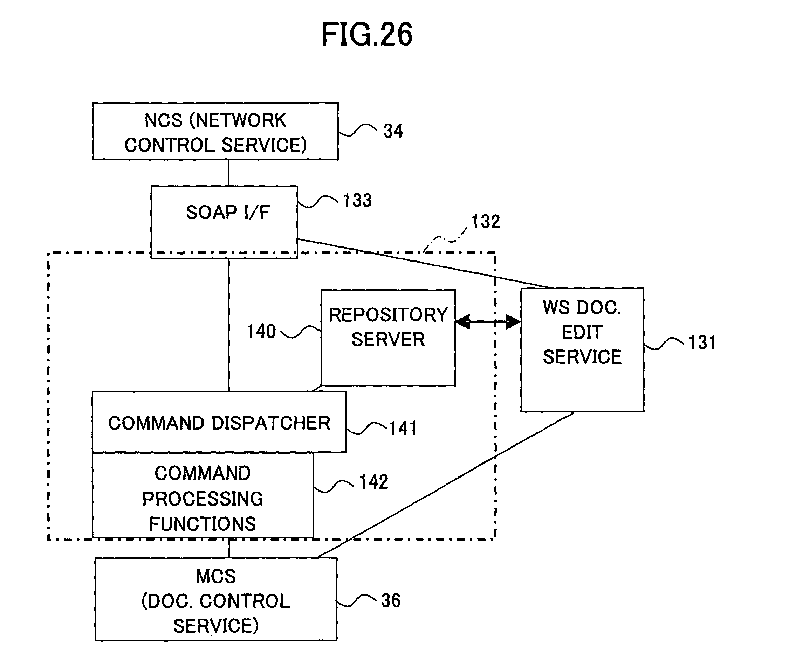

FIG. 26 is the block diagram showing the details of WS document management service 132.

As shown in FIG. 26, the WS document management service 132 comprises the Repository Server (RS) 140, the Command Dispatcher (CD) 141, and the command processing functions 142.

Among these, the RS 140 is the module which receives the communication from the other services in the same multi-function peripheral system.

The CD 141 interpretes the command requested from the services in addition to this in the client application 135 and the multi-function peripheral system, and calls the corresponding command processing function.

The command processing functions 142 are the set of functions which process various commands supplied by the services.

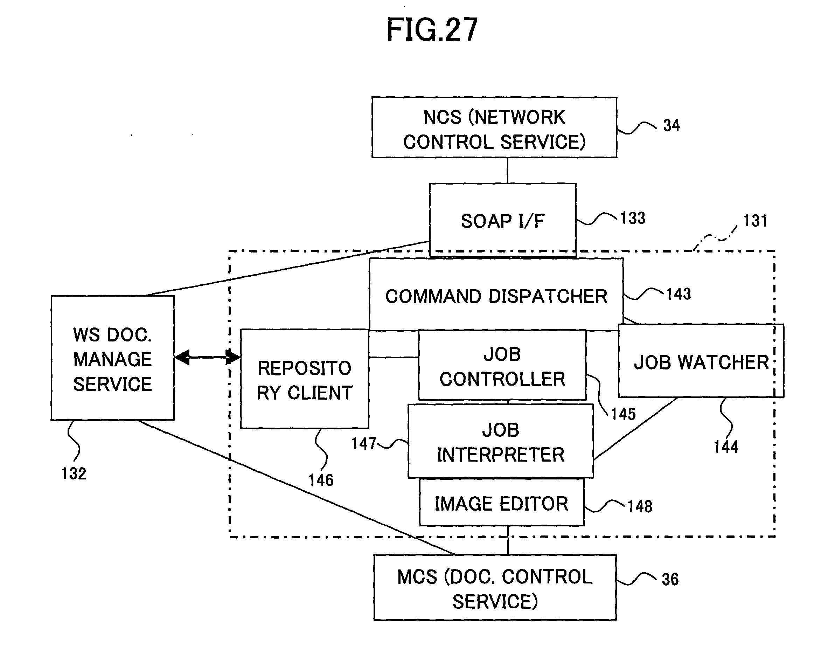

Next, the details of the WS document edit service 131 will be explained using FIG. 27.

As shown in FIG. 27, the WS document edit service 131 comprises the CD (Command Dispatcher) 143, the RC (Repository Client) 146, the JC (Job Controller) 145, the JW (Job Watcher) 144, and the JI (Job Interpreter) 147, and the IE (Image Editor) 148.

The CD 143 interpretes the command requested from the client application 135 and sends the command to JC 145 and JW 144.

The JC 145 controls creation of the job instruction which receives and mentions the command from the CD 143 later, the setup of the edit information on the job instruction, creation of job, execution of job, and cancellation of job.

The JW 144 supervises the job management using the queue within the IE, and answers the job information in the reference of the job state, and the reference command of the job result.

The RC 146 is the module which communicates with the Repository service in the same device, and uses service of Repository. The JI 147 interprets job received from JC 145, creates the job for every page, and the plane job for CMYK each color plane of every, and creates the editing operation job corresponding to the editing operation of further each.

The IE 148 performs in order each edit job connected to plane job to the corresponding plain image with reference to the plane job of the head of the queue managed by JI 147, and attains image edit processing. Moreover, the state of plane job is updated according to the situation of edit processing.

Next, the processing which is performed by the WS document management service 132 and the WS document edit service 131 will be explained.

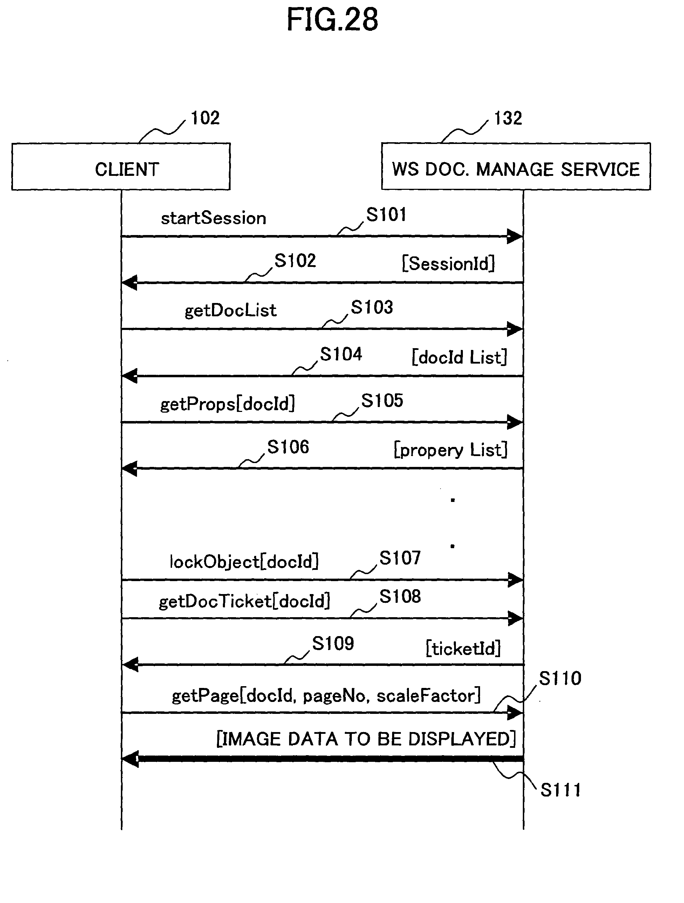

First, the processing performed between the client 102, the WS document management service 132 and the WS document edit service 131 will be explained using FIG. 28.

FIG. 28 shows the sequence diagram for the processing until it transmits the image displayed on the client from the multi-function peripheral system.

At step S101, the client 102 notifies the command startSession which requests the start of the session, to the WS document management service 132.

At step S102, the WS document management service 132 notifies the SessionID to the client 102.

At step S103, the client 102 notifies the command getDocList which requests receiving of the list of documents, to the WS document management service 132.

At step S104, WS document management service 132 notifies the list of documents to the client 102. This list may be the thumbnail and may be the list which consists of the character. Moreover, docId which is respectively unique ID is assigned by each document displayed on the list.

Next, the client 102 is step S105 and notifies the command getProps which requests the property of the specific document to WS document management service 132 with docId which determines the document. This property is the bibliographic information of the document, for example, what expressed the representation image of the document and the information about the document by XML is mentioned as an example.

At step S106, WS document management service 132 notifies the property of the document corresponding to docId to the client 102. This property is acquirable any number of times if needed for the client 102.

Thus, the property is acquired, and since the image to edit is locked, the client 102 which the image to edit determined is step S107, and is notified to WS document management service 132 with docId of the image which locks the command lockObject which requests the lock of the image.

Moreover, the client 102 is step S108 and notifies with docId the command getDocTicket which requests Ticket ID to WS document management service 132.

The ticket ID in this case checks existence of the authority to perform edit of the locked image.

At step S109, WS document management service 132 notifies Ticket ID to the client 102.

At step S 110, the client 102 notifies the command getPage which requests the image to WS document management service 132 with docId, pageNo, and scaleFactor.

Here, with pageNo, when the document to edit has two or more pages, the page is determined. The scaleFactor specifies the scale of the image displayed by the client 102.

The WS document management service 132 of which the image was required by Command getPage is step S111 corresponding to the document-related information supply step, and transmits the data of the image to display to the client 102.

Here, the data transmitted is the reduced image data, changed not the data itself currently recorded on HDD 65 but data with the image process accelerator 44, and made data size smaller than the original data.

Thereby, while being able to lessen the amount of the memory used of the client 102, the traffic of the network which transmits data is mitigable.

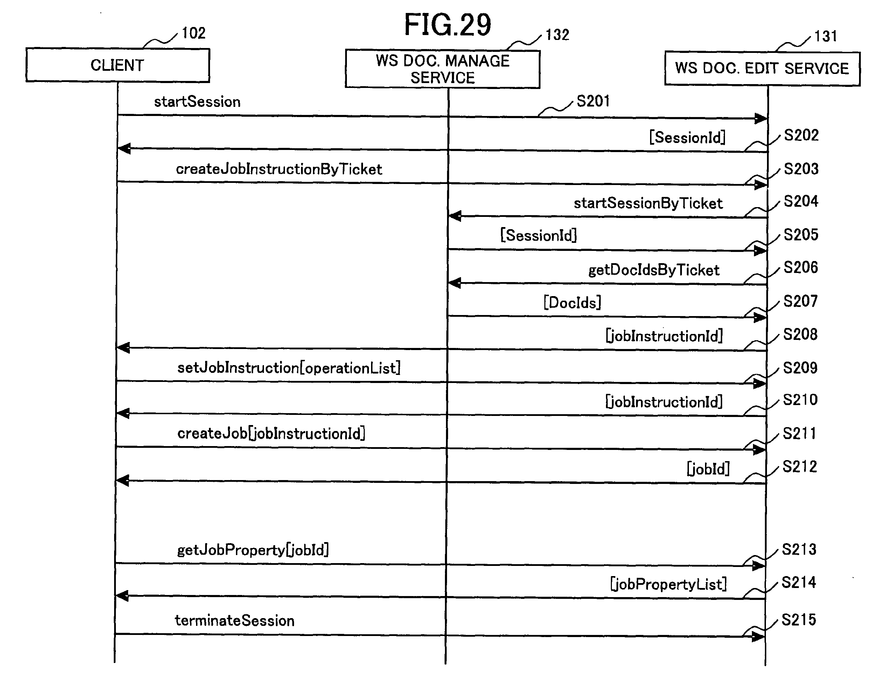

Next, FIG. 29 is a sequence diagram for explaining the processing to edit the image data of the document of interest and receive the edit job.

At step S201, the client 102 notifies the command startSession which requests the start of the session, to the WS document edit service 131.

At step S202, the WS document edit service 131 notifies SessionID to the client 102.

At step S203, the client 102 notifies the command createJobInstructionByTicket which requests creation of the edit job instruction, to the WS document edit service 131.

At step S204, the WS document edit service 131 notifies the command startSessionByTicket which requests receiving of the Session ID, to the WS document management service 132.

At step S205, the WS document management service 132 notifies the Session ID to the WS document edit service 131.

At step S206, the WS document edit service 131 notifies the command getDocIdsByTicket which requests receiving of ID of the document, to the WS document management service 132.

At step S207, the WS document management service 132 notifies the DocIds to the image edit service 131.

At step S208, the WS document edit service 131 notifies the job instruction ID jobInstructionId to the client 102.

At step S209, the client 102 notifies the command SetJobInstruction which sets edit operation information in the image edit job instruction, to the WS document edit service 131 together with the operation list made into the edit job.

At step S210, the WS document edit service 131 notifies the JobInstructionId to the client 102.

At step S211, the client 102 notifies, together with the JobInstructionId, the command createJob which carries out execution of the image edit job creation, to the WS document edit service 131.

At step S212, the WS document edit service 131 notifies the job ID jobId to the client 102.

At step S213, the client 102 notifies the command getJobProperty which requests the receiving of the state of the edit job, to the WS document edit service 131 together with the jobId.

At step S214, the WS document edit service 131 notifies the job property list jobPropertyList to the client 102.

At step S215, the client 102 notifies the command terminateSession which requests the termination of the session, to the WS document edit service 131 so that the session is terminated.

Apart from the above-mentioned commands, there are the command getProps which acquires the property of the document of interest, and the command unlockObject which performs the unlock request of the document, which are transmitted between the client 102 and the document management service 132.

Moreover, there is the command cancelJob which cancels the image edit job, which is transmitted between the client 102 and the image edit service 131.

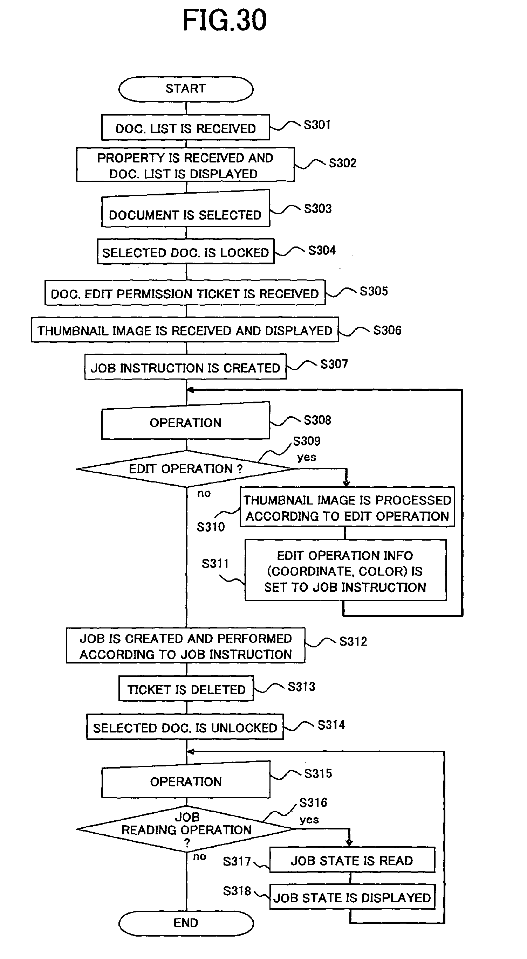

Next, FIG. 30 is a flowchart for explaining the processing of the client 102.

At step S301 corresponding to the document list information supply step, the client 102 acquires the list information concerning the document of interest.

At step S302, the client 102 acquires the property of each document to look through, and indicates this by the list.

At step S303, the selection of the document to edit of the user is attained. If the document to edit is chosen, at step S304, the client 102 writes in the selection document and locks it.

Next, the client 102 is step S305 and acquires the document edit permission ticket of the document to edit.

And the client 102 is step S306, acquires the 1-page image data for the display of the selection document, and displays this on display.

Next, the client 102 is step S307 and draws up the image edit job instruction in image edit service using the document edit permission ticket. Step S308 is registration of the editing operation of the document by the user.

If editing operation is received, the client 102 is step S310, will make editing operation reflect and will process the reduced image.

And the client 102 is step S311 and sets the information on the editing operation which the user performed as the image edit job instruction.

The above-mentioned step S310 corresponds to the editing operation reflection step. The processing of steps S308 to step S311 is repeated until editing operation is completed.

After editing operation is completed, processing progresses to step S312 and the client 102 requires creation execution of the image edit job using the image edit job instruction.

At step S313, the client 102 deletes the ticket, is step S314 and unlocks the selected document.

The above-mentioned step S312 corresponds to the edit step and the job creation execution step.

Next, the client 102 is step S315 and receives the job reference operation by the user.

When reference operation of the job is received, the client 102 is step S317 and refer to the job state of the image edit job for it.

And the client 102 indicates the job state of the image edit job referred to as step S318.

After reference operation of the job by the user is completed at step S316, the client 102 ends processing. The above-described processing is for every module of the client.

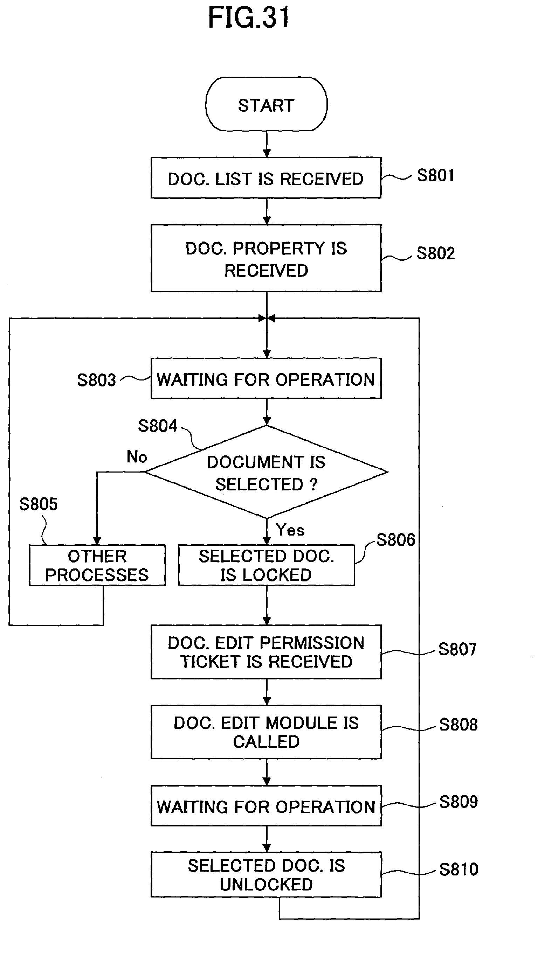

FIG. 31 is a flowchart which shows processing of the document management module 306.

The document management module 306 is step S801, and acquires the list information on the document.

Next, at step S802, the document management module 306 acquires the property of each document to look through, and indicates this by the list.

Next, the document management module 306 is step S803, and will be in the operation standby state.

At step S804, the document management module 306 judges whether the document is chosen or not, when not chosen, processes others at step S805, and will be in the operation standby state again.

If the document is chosen, at step S806, the document management module 306 writes in the selection document, and locks the selected document.

Next, the document management module 306 is step S807, and acquires the document edit permission ticket of the document to edit.

And the document management module 306 is step S808, and calls the document edit module 310.

Then, the document management module 306 is step S809, and will be in the operation standby state.

After edit is completed, the document management module 306 is step S810, unlocks the selection document and performs processing of step S803 again.

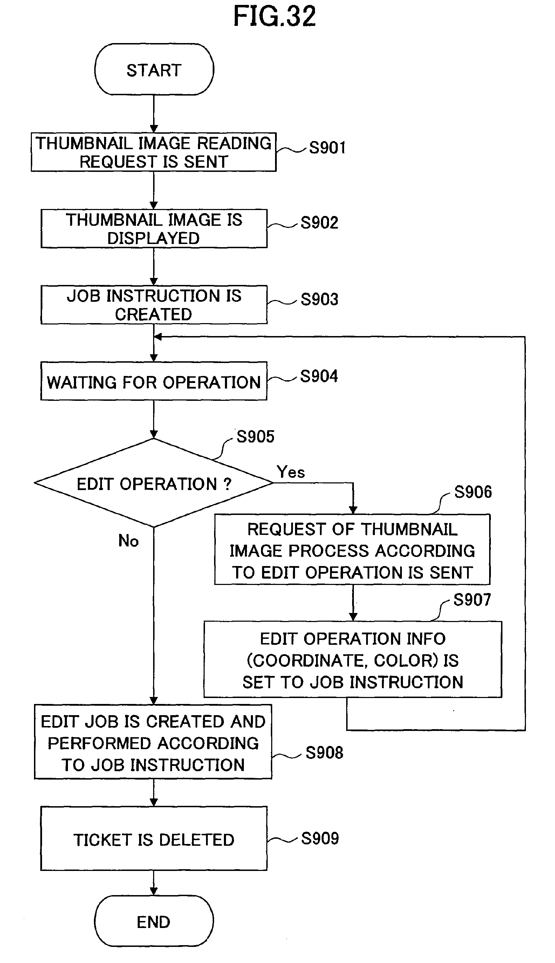

Next, the processing of the document edit module 310 will be explained using the flowchart of FIG. 32.

This flowchart shows the processing from the place in which the document edit module 310 is called by step S808 of FIG. 31.

If the reduced image acquisition request is notified, the document edit module 310 will be step S902 corresponding to the document-related information display unit, and will express the reduced image as step S901.

Next, the document edit module 310 is step S903, and draws up the job instruction.

The following step S904 is in the standby state by editing operation.

When it is the editing operation which judges whether it is editing operation, it is step S905, and the document edit module 310 is step S906, and the document edit module 310 makes editing operation reflect, and processes the reduced image.

And the document edit module 310 is step S907, sets the information on the editing operation which the user performed as the image edit job instruction, and will be in the operation standby state of step S904 again.

At step S905, if it judges that it is not editing operation, the document edit module 310 will be step S908, and will require creation execution of the image edit job using the image edit job instruction. And the client 102 deletes the ticket at step S909.

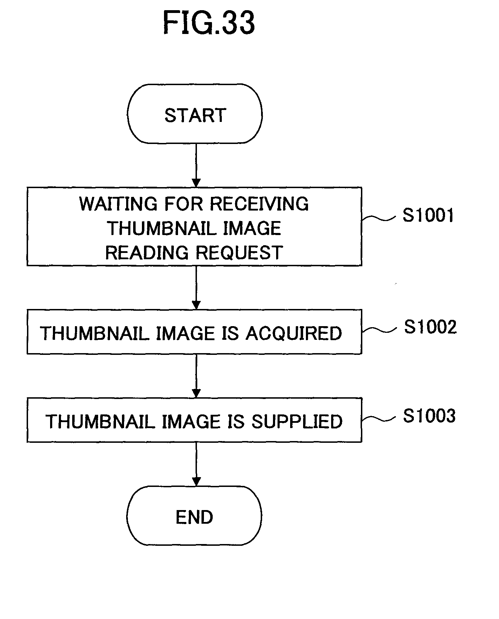

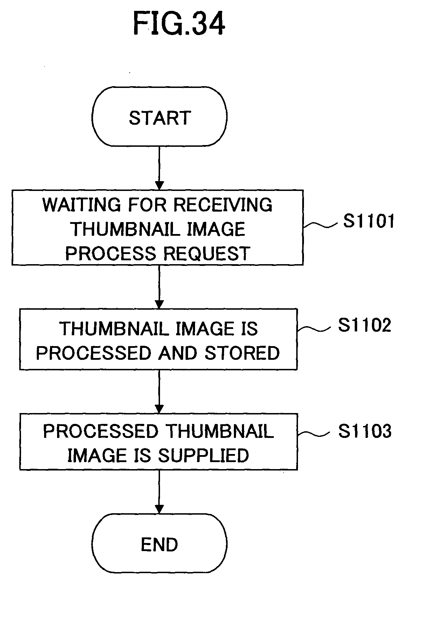

Next, the processing of the reduced image management module 311 will be explained using the flowchart of FIG. 33 and FIG. 34.

The flowchart of FIG. 33 shows the processing from the place in which the reduced image management module 311 is called by step S901 of FIG. 32.

The reduced image management module 311 is step S1001, and is in the standby state of the reduced image acquisition request.

If the request comes from the document edit module 310, the reduced image management module 311 will be step S1002 corresponding to the document-related information acquisition step, and will acquire the reduced image.

At the following step S1003, the reduced image management module 311 supplies the document edit module 310 with the reduced image.

In the flowchart of FIG. 34, the processing from the place in which the reduced image management module 311 is called by step S906 of FIG. 32 is illustrated.

The reduced image management module 311 is in the standby state of the reduced image process request at step S 1101.

If the reduced image process request comes from the document edit module 310, the reduced image management module 311 is step S 1102, and processes and stores the reduced image.

And the reduced image management module 311 supplies the document edit module 310 with the processed reduced image at step S1103.

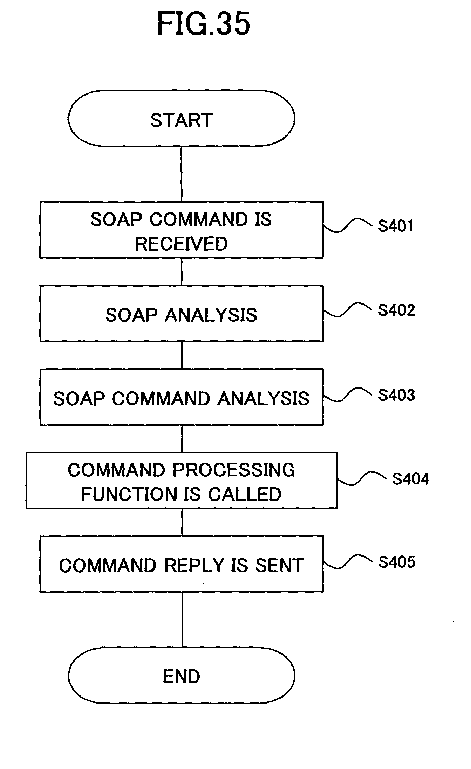

Next, the operation of WS document management service 132 in the service use from the client 102 will be explained using the flowchart of FIG. 35.

At step S401, the SOAP I/F 133 receives the command which used SOAP from the client, and at step S402 analyzes SOAP envelope, and extracts the command.

At step S403, the WS document management service 132 analyzes the command.

And the WS document management service 132 calls the command-processing function corresponding to the command at step S404.

At step S405, the response of the command-processing function is wrapped in SOAP I/F133 by SOAP, and is answered to the client 102.

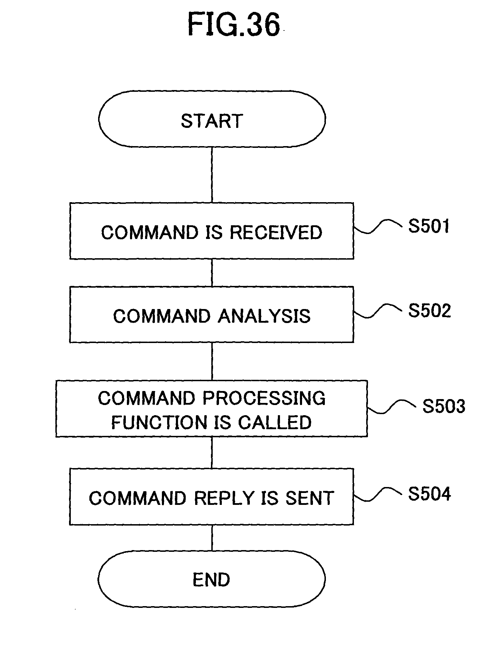

Next, the operation of the WS document management service 132 in the service use from other services in the multi-function peripheral system will be explained using the flowchart of FIG. 36.

At step S501, the WS document management service 132 receives the command through RS 140 from other services.

At step S502, the WS document management service 132 analyzes the command, and at step S503 calls the command-processing function corresponding to the command.

And the document management service 132 returns the response of the command-processing function at step S504.

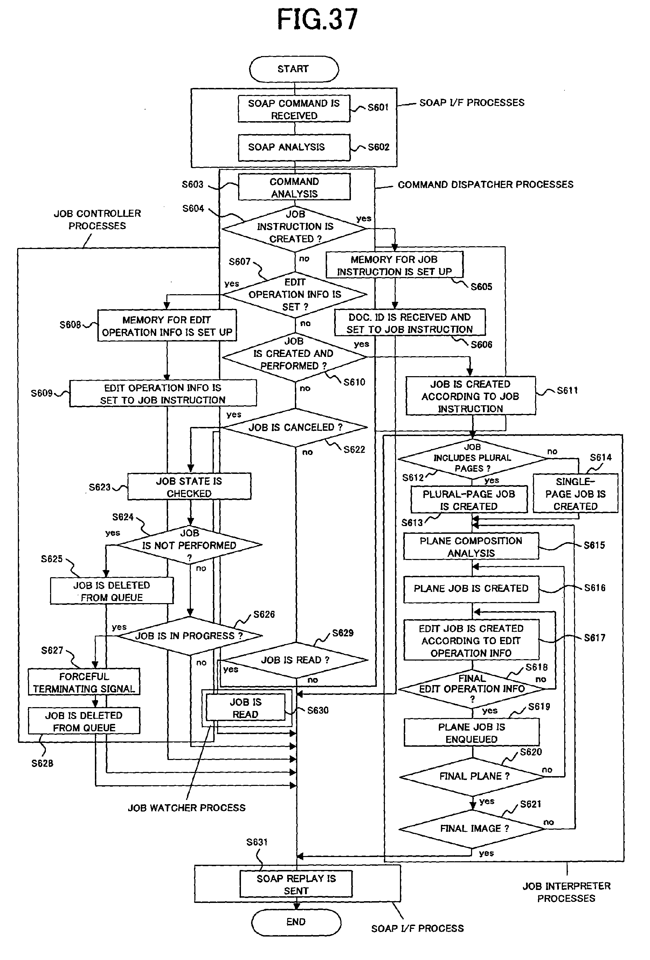

Next, the operation of the WS document edit service 131 will be explained using the flowchart of FIG. 37.

At step S601, the SOAP I/F 133 receives the command which used SOAP from the client 102, and at step S602, analyzes SOAP Envelope, and extracts the command.

At step S603, the CD 143 analyzes the command.

At step S604, the CD 143 judges whether job control processing is job instruction creation, and if it is job instruction creation, JC 145 will secure the memory storage for job instructions at step S605.

JC 145 receives at step S606, the ID of the document corresponding to the ticket from WS document management service 132, it sets in the job instruction, and processing progresses to step S631.

It returns to step S604, and when it is not job instruction creation, it judges whether the CD 143 is the setup of the operation information on the job instruction at step S607.

In the setup of operation information, JC 145 is step S608, secures the region for operation information and sets operation information.

JC 145 sets at step S609 the pointer to operation information to the job instruction, and processing progresses to step S631.

It returns to step S607, and when it is not the setup of operation information, it judges whether the CD 143 is step S610 and is creation execution of the job.

In the job creation execution, JC 145 analyzes the target job instruction, creates job at step S611, and connects it to the queue. Next, JI 147 is step S612, analyzes the run unit of the job and judges whether it is job to two or more pages.

If it is job to two or more pages, JI 147 will be step S613 and Page job will be created for every page, and if it is job to the single page, it will be step S614, the single page job will be created, and it will connect with the page job list.

Next, JI 147 analizes at step S615 the plain composition of the page for operation, creates plane job for every plane which is step S616 and is constituted, and connects it to the plain job list.

Next, JI 147 reads out at step S617 one edit operation information from the job instruction, creates Edit job, and connects it to the edit job list of plain job.

At step S618, if the reference of all edit operation information is completed, plane job will be connected to the queue referred to from IE 148 by step S619. When not ending, processing of step S617 is performed again.

Next, JI 147 judges at step S620 whether creation of plane job is completed in all planes. When not ending, processing of step S616 is performed again.

When it ends, JI 147 judges at step S621 whether creation of Page job is completed to all the pages that are applicable.

When it ends, JI 147 returns ID of job and processing progresses to step S631. When not ending, processing of step S616 is performed again.

The processing of the above steps S611 to S621 corresponds to the edit reflection step.

It returns to processing of step S610, and when it is not creation execution of the job, it judges whether the CD 143 is step S622 and is cancellation of the job.

In cancellation of the job, JC 145 checks at step S623 the job corresponding to the specified job ID on the execution queue, and checks the state of the job.

JC 145 judges at step S624 whether the state of the job is the non-running state.

If the job is the non-running state, JC 145 deletes at step S625 the job from the execution queue and processing will progress to step S631.

If the job becomes during execution, through step S626, JC 145 is step S627, transmits the forced-termination signal to the job, will be step S628, and will delete the job from the execution queue, and processing will progress to step S631.

It returns to processing of step S622, and when it is not cancellation of the job, the CD 143 is step S629 and judges whether it is the reference of the job.

In the reference of the job, JW 144 looks for the job corresponding to the given job ID on the execution queue, the state of the job is acquired, and processing progresses to step S631.

When it is not the reference of the job, either, processing progresses to step S631 similarly.

The response based on the processing which mentioned step S631 above is answered from SOAP I/F 133.

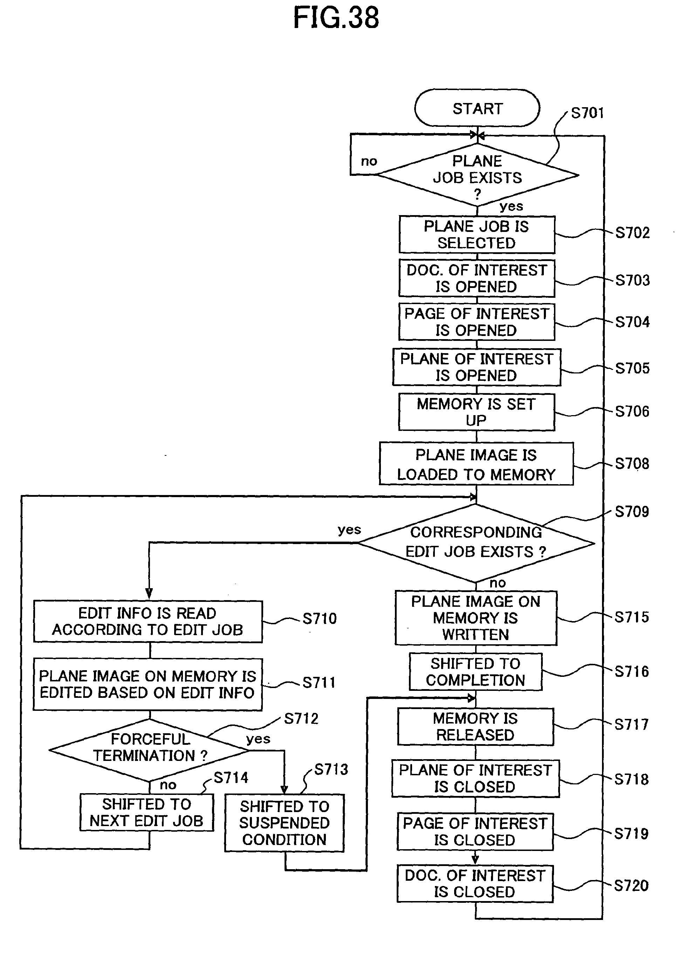

Next, the operation of IE 148 will be explained using the flowchart of FIG. 38.

At step S701, if plane job exists in the queue of Plane Job, IE 148 will be step S702 and will choose the head job.

At the following step S703, IE 148 opens the document for edit of this job. IE 148 is step S704 and opens the page for edit of this job edit.

Next, IE 148 is step S705 and opens the plane for edit of this jobt. And IE 148 is step S706, secures the memory for reading the plain image, and reads the plain image at step S708 on the secured memory.

It judges whether at step S709, IE 148 has the corresponding edit job.

If the corresponding edit job exists, IE 148 will be step S710 and will acquire edit information from this edit job. IE 148 is step S711, follows this edit information and performs editing operation of the image on memory.

At step S712, IE 148 judges whether the signal of forced termination is received.

When receiving, IE 148 interrupts edit processing, is step S713, changes the state of the job into "the discontinuation", and advances processing to step S717.

When the signal of forced termination is not received, IE 148 is step S714 and advances processing to step S717 with reference to the next edit job.

At step S709, when it is judged that there is no corresponding edit job, since the edit job which should be performed is lost, IE 148 is step S715 and returns the plain image after edit to HDD 65. And IE 148 is step S716 and changes the state of the job into "completion".

Next, IE 148 releases the memory currently used at step S717. And IE 148 is step S718, it is step S719, CLOSE(s) the object page, it is step S720, CLOSE(s) the object plane is CLOSE(ed), and the object document, and advances processing to step S701 again.

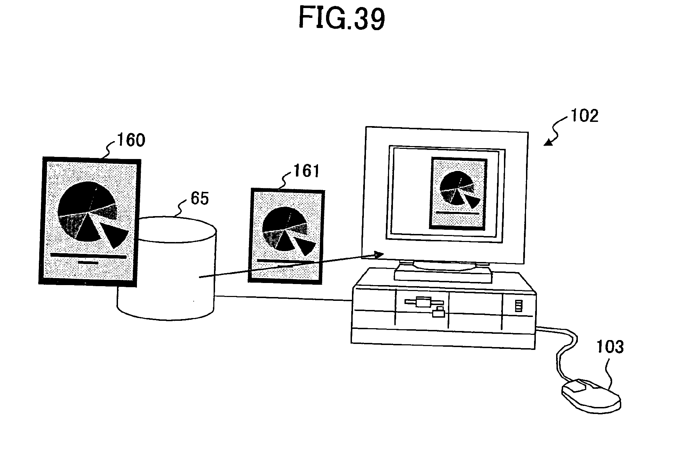

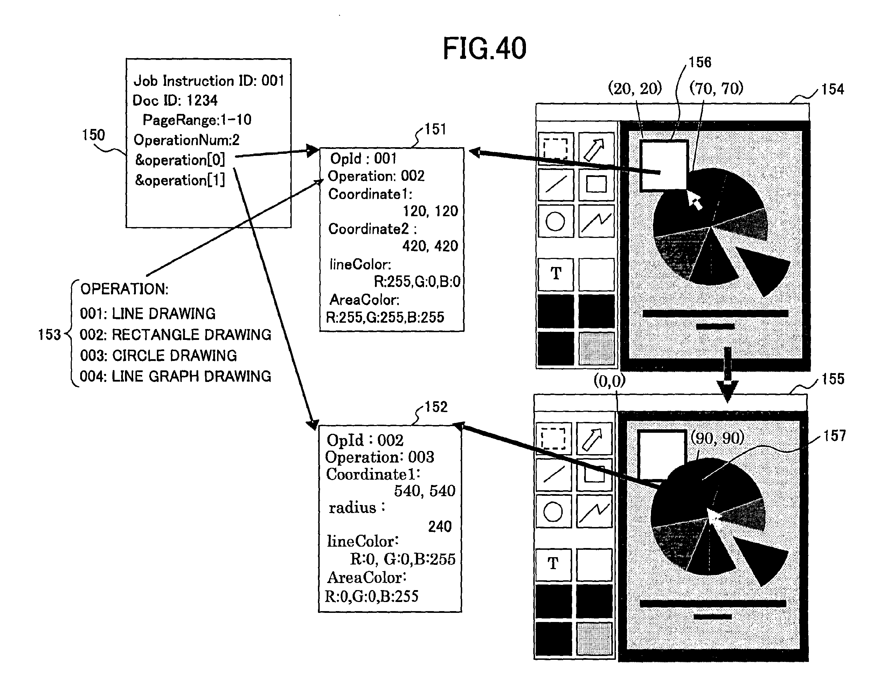

The processing explained above explains the situation of the edit in the client 102 using FIG. 39 and FIG. 40.

FIG. 39 shows the situation when displaying the document list on display of the client 102, and acquiring and displaying the display image for image edit after document selection.

The image 160 currently recorded on HDD 65 and HDD 65, the image 161 for edit transmitted to the client 102, and the client 102 and the mouse 103 are shown in FIG. 39.

In FIG. 39, the images 160 are the data of CMYK color space in 600dpi.

Moreover, display of the client 102 has the display resolution of 100dpi.

The images 161 for edit transmitted in accordance with this display are the data of the sRGB color space of 100dpi which is reduced in the main-scanning and sub-scanning directions to one sixth, respectively. Thus, the data size of the image 161 for edit is smaller than the data size of the original image 160.

Next, FIG. 40 shows the condition of the client in which the document image is edited.

In FIG. 40, the job instruction 150, the edit operation information 151 and 152, the operation classification 153, the edit displays 154 and 155, the rectangle 156, and the circle 157 are illustrated. The job instruction 150 includes Id, DocId, PageRange, OperationNum, and &operation [0] and &operation [1].

Among these, the Id is identification (ID) of the job instruction itself. The DocId is identification (ID) of the document mentioned above. The PageRange indicates the range of the page of the document. The OperationNum is the number of the operations shown in this job instruction. The &operation [0] and the &operation [1] respectively indicate the start addresses of the edit operation information 151 and 152.

The edit operation information will be explained using the edit operation information 151.

The edit operation information 151 includes OpId, Operation, Coordinate1, Coordinate2, lineColor, and AreaColor. The OpId indicates identification (ID) of this edit operation information 151. The Operation indicates the operation classification which is the classification of a graphic object to be drawn.

As shown in the operation classification 153, "001" indicates drawing, "002" indicates rectangle drawing, "003" indicates circle drawing, "004" breaks and operation classification indicates image drawing. Therefore, in the case of the edit operation information 151, it is rectangle drawing.

Next, Coordinate indicates the coordinate, and since it is the rectangle in the case of the edit operation information 151, the rectangle can be drawn if two coordinate positions which face each other by the diagonal line are known. Therefore, two Coordinate(s) exist.

In the edit operation information 151, Coordinate1 and Coordinate2 are "120, 120", and "420, 420", respectively.

Moreover, in the edit display 154, the coordinate corresponding to Coordinate1 and Coordinate2 is (70, 70), respectively (20 20).

Thus, since the edit display 154 is reduced to one sixth in the man-scanning and sub-scanning directions, respectively, that to which coordinate transformation was performed is indicated by edit operation information. The lineColor indicates the color of the rectangular side. This color is expressed with RGB. The Area-Color indicates the color inside the rectangle. This color is similarly expressed with RGB.

The edit display 155 indicates the screen describing the circle 157, after drawing the rectangle mentioned above. The above is edit operation information.

Thus, edit operation information contains the form, coordinate, and color of the graphic object.

Moreover, the coordinate is changed according to the degree of reduction.

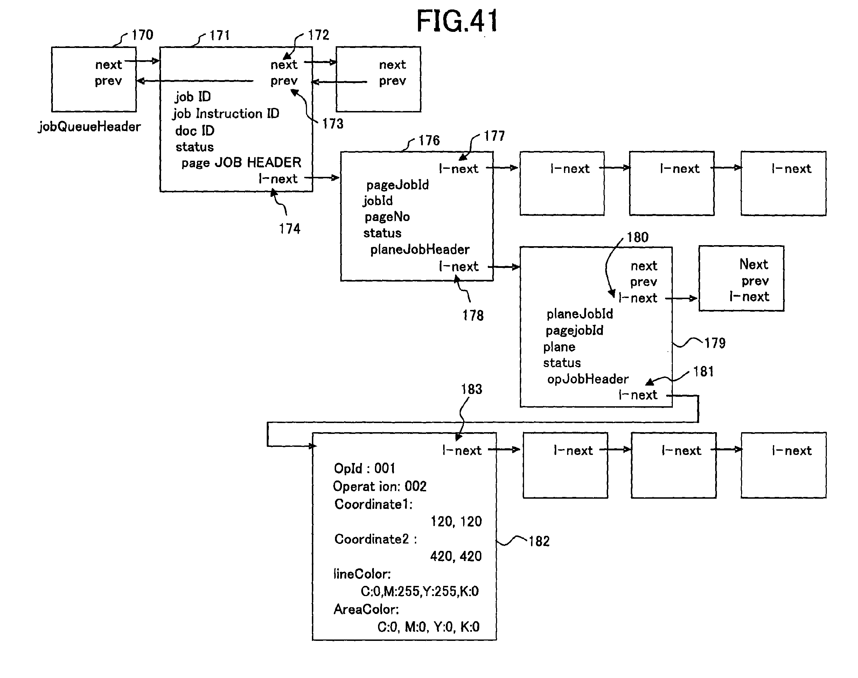

Next, the job queue is explained using FIG. 41. First, the structure of this queue is explained.

This queue is the queue of the method which connects the thing on a par with the queue with the chain.

When A and B are located in a line with the queue in this order as tying with the chain, in order to show that the degree of A is B, A is holding the start address of B. By doing so, it follows and sticks from A to B.

Moreover, B is the last of the queue, and in order to show that it is the last, NULL or Oxffffffff (hexadecimal) is used for the start address which shows the degree of B since the degree does not exist.

Furthermore, B may hold the start address of A so that it may follow and stick from B also to A. In this case, it will be connected with the two chains, the chain from A to B mentioned above, and the chain from B to A.

In addition, the number of the array other than the start address may be used.

Next, although it is the queue shown in FIG. 36, this queue consists of the job queue, the page job queue, the plain job queue, and the four queues of the operation job queue. The job queue is the queue with which the job control structure is located in a line.

The page job queue is the queue with which the page job control structure is located in a line.

The plain job queue is the queue with which the plain job control structure is located in a line.

The operation job queue is the queue with which the operation job control structure is located in a line.

These queues do not necessarily exist separately. Each job control structure on a par with the job queue can have the page job queue now.

Moreover, each page job control structure on a par with the page job queue can have the plain job queue now.

Furthermore, each plain job control structure on a par with the plain job queue can have the operation job queue now. That is, it has the structure where the page job queue hangs down from the job queue, the plain job queue hangs down from the page job queue, and the operation job queue hangs down from the plain job queue further.

The above will be explained using FIG. 41.

The header 170, the job control structure 171, the page job control structure 176, the plain job control structure 179, and the operation job control structure 182 of the job queue are shown in FIG. 41.

The header 170 indicates the head of the job queue. The job control structure 171 has next172, prev173, I-next 174, jobId, the job instruction id, docId, status, and pageJobHeader. Next 172 indicates the start address of the following job control structure.

Although prev 173 indicates the start address of the front job control structure, since the front is the header, in the case of the job control structure 171, it serves as the start address of the header. The I-next 174 indicates the start address of the page job control structure.

In addition, next is used for the number of the chains with which the difference between next and the I-next connects control-structure objects and which was mentioned above the case of two, and the I-next is used when it is one.

Therefore, the job control structure is connected with the two chains, and the page job control structure is connected with the one chain.

Returning to explanation of the job control structure, jobId indicates ID of the job. The job instruction id indicates ID of the job instruction. The docId indicates ID of the document. status indicates the state of the job. The pageJobHeader is the header of the page job queue, in order that the page job queue may hang down from here.

Next, the page job control structure 176 will be explained.

The page job control structure 176 has I-next 177, I-next 178, pageJobId, jobId, pageNo, status, and planeJobHeader. The I-next 177 indicates the start address of the following page job control structure. The I-next 178 indicates the start address of the plain job control structure. The pageJobId indicates ID of the page job. The jobId indicates ID of the job. The pageNo indicates what page it is. status indicates the state of the job. The planeJobHeader is the header of the plain job queue, in order that the plain job queue may hang down from here.

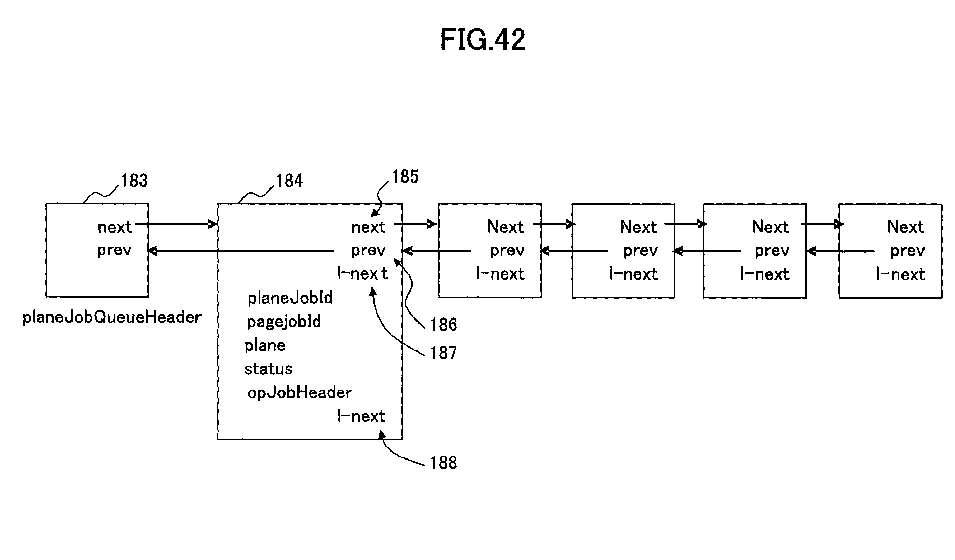

Next, the plain job queue is explained using FIG. 42.

The header 183 and the plain job control structure 184 of the plain job queue are shown in FIG. 42.

The header 183 indicates the head of the plain job queue. The plain job control structure 184 includes next 185, prev 186, I-next 187, I-next 188, planejobId, pagejobId, plane, status, and opJobHeader. The next 185 indicates the start address of the following plain job control structure. The prev186 indicates the start address of the front plain job control structure, and the front is the header in the case of the plain job control structure 184, and it serves as the start address of the header. The I-next 187 is used when tying with the one chain. The planejobId indicates ID of the plain job. The pagejobId indicates ID of the page job. The pageNo indicates what page it is. The status indicates the state of the job. The opJobHeader is the header of the operation job queue, in order that the operation job queue may hang down from here. The I-next 188 indicates the start address of the operation job control structure.

Referring back to FIG. 41, the I-next 180 is used for the plain job control structure 179 shown in FIG. 41, and the plain job queue is the queue connected with the one chain. The I-next 181 indicates the start address of the operation job control structure 182.

Next, the operation job control structure 182 is explained.

The operation job control structure 182 include I-next 183, opId, Operation, Coordinate1, Coordinate2, lineColor, and AreaColor. The opId indicates ID of operation. The Operation indicates the operation of what position it is. The Coordinate1, the Coordinate2, the lineColor, and the AreaColor are the information indicating the rectangle shown in FIG. 40. As mentioned above, the job queue is constituted.

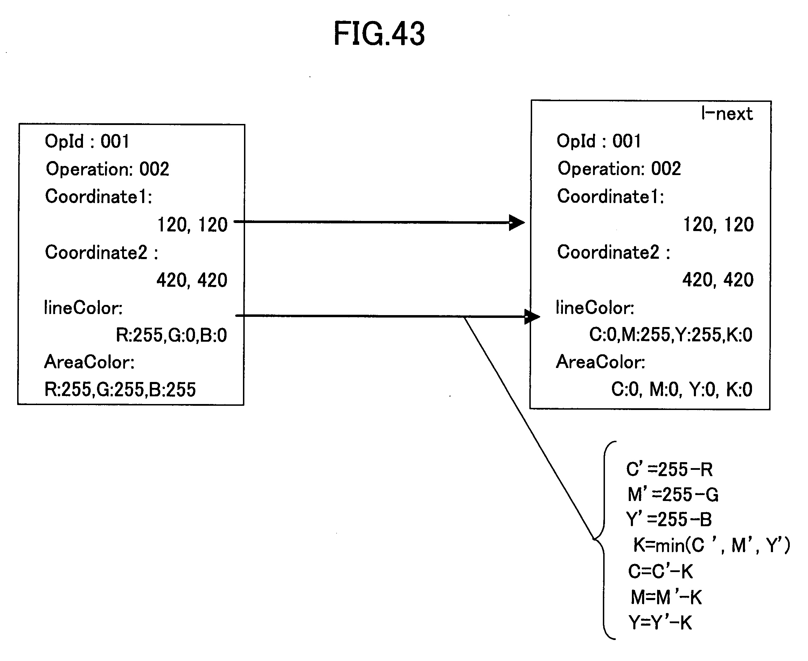

Next, when the job of image operation of the RGB system is performed using FIG. 43, signs that this is translated into Job of CMYK are explained.

The conversion of color space from the RGB system to the CMYK system is carried out as shown in FIG. 43.

$$C' = 255 - R$$

$$M' = 255 - G$$

$$Y' = 255 - B$$

$$K = min(C', M', Y')$$

$$C = C' - K$$

$$M = M' - K$$

$$Y = Y' - K$$

Therefore, as shown in FIG. 43, when R is equal to 255 and G and B are equal to 0, C and K are set to 0 and M and Y are set to 255. Accordingly, the conversion of color space from the RGB system to the CMYK system is carried out in the above-described mannre. Hence, the color information is converted according to the color space to which the color belongs.

In addition, JPEG image data as a kind of image data are categorized into three types. The JPEG image data of the first type are comprised of a single image data. The JPEG image data of the second type are comprised of C image data, M image data, Y image data and K image data, which are converted into a set of R image data, G image data and B image data. The JPEG image data of the third type are divided into a character part and an image part, each of which is comprised of C image data, M image data, Y image data and K image data.

It should be noted that the document edit method of the present invention is applicable to the image data of this kind regardless of whether the image data are comprised of a single image data or a plurality of image data.

The present invention is not limited to the above-described embodiments, and variations and modifications may be made without departing from the present invention.

Further, the present application is based upon and claims the benefit of priority from Japanese patent application No. 2003-292493, filed on August 12, 2003, Japanese patent application No. 2003-329076, filed on September 19, 2003, Japanese patent application No. 2004-219895, filed on July 28, 2004, and Japanese patent application No. 2004-219896, filed on July 28, 2004.

**Claims**

1. A document edit method for editing a document containing image data, stored in an image processing apparatus, at a node which communicates with the image processing apparatus through a network, **characterized in that** the document edit method comprises the steps of:

   receiving a document of interest from the node through the network;
   supplying document-related information with respect to the document to the node;
   creating edit job information for storing edit content information which is created when the document is edited at the node;
   storing the edit content information in the edit job information; and
   performing an edit job of editing the document based on the edit content information stored in the edit job information.

2. The document edit method according to claim 1 **characterized in that** the document-related information contains at least one of image-skew-related information and noise-related information with respect to the image data contained in the document.

3. The document edit method according to claim 1 or 2 **characterized in that** the step of creating the edit job information comprises notifying, to the node, edit job information identification that specifies the edit job information, after the edit job information is created.

4. The document edit method according to any of claims 1 to 3 **characterized in that** the step of storing the edit content information comprises notifying, to the node from which the edit content information is received, edit job execution identification that is used to perform the edit job based on the edit content information, after the edit content information is stored in the edit job information.

5. The document edit method according to any of claims 1 to 4 **characterized in** further comprising notifying, to the node, an edit job state which indicate a state of the edit job currently performed in the image processing apparatus.

6. The document edit method according to any of claims 1 to 5 **characterized in** further comprising printing the edited document after the edit job is performed.

7. The document edit method according to any of claims 1 to 5 **characterized in** further comprising delivering the edited document to another node in the network after the edit job is performed.

8. An image processing apparatus having programs configured to edit a document containing image data at a node which communicates with the image processing apparatus through a network, and configured to perform processing related to the document editing, **characterized in that** the image processing apparatus comprises:

   a document-related information detection unit detecting document-related information with respect to the document;
   a document-related-information supplying unit supplying the node with the detected document-related information;
   an edit content information acquisition unit receiving edit content information, which is created when the document is edited at the node, from the node; and
   an edit execution unit editing the document based on the received edit content information and providing a shared interface to the respective programs.

9. The image processing apparatus according to claim 8 **characterized in that** the document-related information contains at least one of image-skew-related information and noise-related information with respect to the image data contained in the document.

10. The image processing apparatus according to claim 8 or 9 **characterized in that** the edit execution unit comprises:

    an edit job information creation unit creating edit job information for storing the edit content information;
    an edit content information storing unit storing the edit content information in the edit job information; and

an edit job execution unit performing an edit job of editing the document based on the edit content information stored in the edit job information.

11. The image processing apparatus according to claim 10 **characterized in that** the edit job information creation unit is configured to notify, to the node, edit job information identification that specifies the edit job information, after the edit job information is created.

12. The image processing apparatus according to claim 10 or 11 **characterized in that** the edit content information storing unit is configured to notify, to the node from which the edit content information is received, edit job execution identification that is used to perform the edit job based on the edit content information, after the edit content information is stored in the edit job information.

13. The image processing apparatus according to any of claims 10 to 12 **characterized in that** the image processing apparatus further comprises an edit-job-state notification unit notifying, to the node, an edit job state which indicate a state of the edit job currently performed in the image processing apparatus.

14. The image processing apparatus according to any of claims 10 to 13 **characterized in that** the image processing apparatus further comprises a printing unit printing the edited document after the edit job is performed by the edit job execution unit.

15. The image processing apparatus according to any of claims 10 to 13 **characterized in that** the image processing apparatus further comprises a delivery unit delivering the edited document to another node in the network after the edit job is performed by the edit job execution unit.

16. A document edit method for editing a document containing image data, stored in an image processing apparatus, at a node which communicates with the image processing apparatus through a network, **characterized in that** the document edit method comprises the steps of:

supplying the node with document-related information with respect to the document stored in the image processing apparatus;
editing the document at the node based on the document-related information; and
reflecting edit operation informationwhich is created when the document is edited at the node, to the document in the image processing apparatus.

17. The document edit method according to claim 16 **characterized in that** the document-related information contains reduced image data which is converted to have a size smaller than a size of the image data of the document.

18. The document edit method according to claim 17 **characterized in that** the document edit method further comprises the step of supplying the node with document list information which indicates a list of documents stored in the image processing apparatus, before the node is supplied with the document-related information.

19. The document edit method according to claim 18 **characterized in that**, in the document list information supplying step, the node is supplied with bibliographic information of the document in addition to the document list information.

20. The document edit method according to any of claims 17 to 19 **characterized in that**, in the editing step, graphic object information with respect to a graphic object edited in the reduced image data is acquired.

21. The document edit method according to claim 20 **characterized in that**, in the editing step, color information of the edited graphic object is acquired.

22. The document edit method according to claim 21 **characterized in that**, in the reflecting step, the edit operation informationis reflected to the document in the image processing apparatus based on the graphic object information and the color information.

23. The document edit method according to claim 20 **characterized in that** the graphic object information contains a classification and coordinates of the graphic object.

24. The document edit method according to claim 23 **characterized in that** the coordinates of the graphic object are converted according to a reduction ratio of the reduced image data.

25. The document edit method according to claim 22 **characterized in that** the color information is converted according to a color space to which a color of the graphic object belongs.

26. An image processing apparatus which allows a node, which communicates with the image processing apparatus through a network, to edit a document containing image data stored in the image processing apparatus, **characterized in that** the image processing apparatus comprises:

> a document storage unit storing the document;
> a document-related information creation unit creating document-related information with respect to the document;
> a document-related information supplying unit supplying the node with the document-related information;
> an edit operation information receiving unit receiving edit operation information which is created when the document is edited at the node; and
> an edit reflection unit reflecting the edit operation information to the image data of the document in the image processing apparatus.

27. The image processing apparatus according to claim 26 **characterized in that** the image processing apparatus further comprises a reduced image data creation unit creating a reduced image data which is converted to have a size smaller than a size of the image data of the document, wherein the document-related information contains the reduced image data.

28. The image processing apparatus according to claim 27 **characterized in that** the image processing apparatus further comprises a document list information supply unit supplying the node with document list information which indicates a list of documents stored in the image processing apparatus, before the node is supplied with the document-related information.

29. The image processing apparatus according to claim 28 **characterized in that** the image processing apparatus further comprises a bibliographic information supply unit supplying the node with bibliographic information of the document in addition to the document list information.

30. The image processing apparatus according to any of claims 27 to 29 **characterized in that** the edit operation information receiving unit is configured to receive graphic object information with respect to a graphic object edited in the reduced image data.

31. The image processing apparatus according to claim 30 **characterized in that** the edit operation information receiving unit is configured to receive color information of the edited graphic object.

32. The image processing apparatus according to claim 30 **characterized in that** the graphic object information contains a classification and coordinates of the graphic object.

33. The image processing apparatus according to claim 32 **characterized in that** the coordinates of the graphic object are converted according to a reduction ratio of the reduced image data.

34. The image processing apparatus according to claim 31 **characterized in that** the color information is converted according to a color space to which a color of the graphic object belongs.

35. A document edit method for editing a document containing image data, stored in an image processing apparatus, by a node which communicates with the image processing apparatus through a network, **characterized in that** the document edit method comprises the steps of:

> acquiring document-related information with respect to the document stored in the image processing apparatus;
> displaying the document-related information at the node;
> reflecting edit operation information, which is created when the document is edited, to the displayed document-related information; and
> requesting the image processing apparatus to create an edit job instruction containing the edit operation information and to perform an edit job of editing the document based on the edit operation information contained in the edit job instruction.

36. The document edit method according to claim 35 **characterized in that** the document-related information contains a reduced image data which is converted to a have a size smaller than a size of the image data of the document.

37. A computer program product embodied therein for causing a computer to execute a document edit method which edits a document containing image data, stored in an image processing apparatus, by a node which communicates with the image processing apparatus through a network, the document edit method comprising steps of:

> acquiring document-related information with respect to the document stored in the image processing apparatus;
> displaying the document-related information at the node;
> reflecting edit operation information, which is created when the document is edited, to the displayed document-related information; and
> requesting the image processing apparatus to create an edit job instruction containing the edit operation information and to perform an edit job of editing the document based on the edit operation information contained in the edit job instruction.

FIG.1

# FIG.2

# FIG.3

CONTROLLER BOARD  ~60

CPU ~61

MEM-P  63

NB ~62

AGP ~67

MEM-C  64

HDD  65~

ASIC  66

PCI BUS

SB ~73

NIC ~74

USB I/F ~75

IEEE1394 I/F ~76

IMAGE PROCESS ACCELERATOR ~44

IMAGE SKEW DETECT ACCELERATOR ~43

OPERATION PANEL

52~

PCI BUS

ENGINE UNIT ~71

EP 1 507 401 A2

# FIG.4

OPE. PANEL CONTROL MODULE — 307

PRINT CONTROL MODULE — 350

DOC. MANAGE MODULE — 306

WS DOC.E./S CLEINT MODULE — 302

WS DOC.M./S CLEINT MODULE — 303

WS PRINT/S CLEINT MODULE — 304

SOAP COMM. MODULE — 301

OS — 300

EP 1 507 401 A2

# FIG.5

ARITHMETIC PROCESSING DEVICE 120
INTERFACE DEVICE 121
INPUT DEVICE 122
DISPLAY DEVICE 123
DRIVE DEVICE 124
RECORDING MEDIUM 125
AUXILIARY MEMORY DEVICE 126
MEMORY DEVICE 127
B

# FIG.6

# FIG.7

- SOAP I/F — 133
- 204 — WEB APPL.
- COMMAND DISPATCHER — 143
- 131
- 142 — COMMAND PROCESSING FUNCTIONS
- SESSION MANAGER — 203
- 130 — DOC. MANAGE SERVICE CLEINT — 146
- COMMAND PROCESSING FUNCTIONS — 142
- 35 — ACS
- IMAGE EDIT APPL.
- WS DOC. EDIT SERVICE
- DOC. MANAGE SERVICE SF — 29
- JOB CONTROLLER — 145
- JOB WATCHER — 144
- 29
- JOB INTERPRETER — 147
- 148
- IMAGE EDITOR
- DOC. EDIT SERVICE SF
- MCS (DOC. CONTROL SERVICE) — 36

EP 1 507 401 A2

# FIG.8

# FIG.9

```
<?xml version="1.0" encoding="UTF-8"?>

<SOAP-ENV:Envelope          xmlns:SOAP-ENC=http://schemas.xmlsoap.org/soap/encoding/

SOAP-ENV:encdingStype=http://schemas.xmlsoap.org/soap/encoding/

xmlns:SOAP-ENV=http://schemas.xmlsoap.org/soap/envelop/       xmlns:xgi=http://www.w3.org/1999/XMLSchemas-instance

xmlns:xsd=http://www.w3.org/1999/XMLSchema>

<SOAP-ENV:Body>

<tmns:getImagePropsByTicket       xmlns:xs=http://www.w3.org/2001/XMLSchema

xmlns:ie=http://www.ricoh.co.jp/xmlns/schema/rdh/imageEdit       xmlns:tmns="http://www.ricoh.co.jp/xmlsns/soap/rdh/imageEdit"

xmlns:ct="http://www.ricoh.co.jp/xmlns/schema/rdh/commonTypes>

<sessionId>041981070379790</sessionId>
                          ⌐ 320
<ticketId>http://xxx.yyy.zzz/rdh/imageEdit/2309392455810</ticketId>
                                               ⌐ 321
</tmns:getImagePropsByTicket></SOAP-ENV:Body></SOAP-ENV:Envelope>
```

EP 1 507 401 A2

# FIG.10

```
<Props          xmlns:soap-enc=http://schemas.xmlsoap.org/soap/encoding/

<item><propName>ie:UnderColor</propName><propVal>notFound</propVal></item>
                                    322
<item><propName>ie:noiseLevel</propName><propVal>1</propVal></item>
                                    323
<item><propName>ieImageSkew</propName><propVal>exist</propVal></item>
                                    324
<item><propName>ie:PunchMarks</propName><propVal>exist</propVal></item>
                                    325
<item><propName>ie:FrameAreaNoise</propName><propVal>notFound</propVal></item>
                                    326
</Props>
```

EP 1 507 401 A2

# FIG.11

```
        ┌──────────┐
        │  START   │
        └──────────┘
              │
              ▼
┌─────────────────────────────┐
│ DOC IMAGE ACQUIRED BY SCANNER │──S21
│     IS STORED IN MEMORY      │
└─────────────────────────────┘
              │
              ▼
┌─────────────────────────────┐
│   IMAGE SKEW DETECT UNIT IS  │
│      REQUESTED TO DETECT     │──S22
│        IMAGE SKEW           │
└─────────────────────────────┘
              │
              ▼
┌─────────────────────────────┐
│   COMPLETION OF IMAGE SKEW   │──S23
│     DETECTION IS AWAITED     │
└─────────────────────────────┘
              │
              ▼
┌─────────────────────────────┐
│      IMAGE IS STORED IN      │──S24
│      HARD DISK DRIVE         │
└─────────────────────────────┘
              │
              ▼
┌─────────────────────────────┐
│  IMAGE SKEW DATA IS STORED AS │──S25
│    ADDITIONAL DATA OF IMAGE  │
└─────────────────────────────┘
              │
              ▼
        ┌──────────┐
        │   END    │
        └──────────┘
```

# FIG.12

START

S31

BINARY IMAGE ? — NO (MULTI-LEVEL IMAGE)

YES

S33

BACKGROUND LEVEL OF IMAGE IS DETECTED

S32

NOISE LEVEL OF IMAGE IS DETECTED

IMAGE SKEW IS DETECTED — S34

PUNCH HOLE OF IMAGE IS DETECTED — S35

IMAGE FRAME NOISE IS DETECTED — S36

END

# FIG.13

EP 1 507 401 A2

DOCUMENT WILL BE PRINTED.

---

THE IMAGE OF THIS DOCUMENT HAS THE FOLLOWING PROBLEMS.
IMAGE EDITNG (EDIT OR MODIFY) IS NEEDED BEFORE PRINTING ?

✓ IMAGE SKEW
✓ PUNCH HOLE INCLUDED } 330

| OK | CANCEL |
|----|--------|

331 332

# FIG.14

| CLIENT (102) | WS DOC. MANAGE SERVICE (132) | WS DOC. EDIT SERVICE (131) |
|---|---|---|

- startSession → S101
- ← [SessionId] S102
- createJobInstructionByTicket → S103
- ← startSessionByTicket S104
- [SessionId] → S105
- ← getDocIdsByTicket S106
- [DocIds] → S107
- [jobInstructionId] → S108
- setJobInstruction[operationList] → S109
- ← [jobInstructionId] S110
- createJob[jobInstructionId] → S111
- ← [jobId] S112
- getJobProperty[jobId] → S113
- ← [jobPropertyList] S114
- terminateSession → S115

EP 1 507 401 A2

**FIG.15**

# FIG.16

S210
IMAGE EDIT JOB INSTRUCTION CREATING REQUEST

[InstructionId]
S211

S215
OPERATION REGISTRATION REQUEST

IMAGE EDIT JOB INSTRUCTION IS UPDATED
S216

IMAGE EDIT JOB CREATING REQUEST
S219

28

| 145 JOB CONTROLLER | 144 JOB WATCHER | 147 JOB INTERPRETER | 148 IMAGE EDITOR |

S301
IMAGE EDIT JOB INSTRUCTION IS REGISTERED

S302

S303
IMAGE EDIT JOB INSTRUCTION IS READ

CREATION OF IMAGE EDIT JOB

JOB ID
S304

INTERNAL JOB SUITED TO INTERNAL IMAGE DATA MANAGEMENT OF DEVICE IS CREATED

S305
INTERNAL JOB PROPERTY

S307
INTERNAL JOB ID

ADDED TO QUEUE
S306

S308
INTERNAL JOB PROPERTY

INTERNAL JOB ID
S310

ADDED TO QUEUE
S309

ASSOCIATION OF JOB ID AND INTERNAL JOB ID IS CREATED

S311

EP 1 507 401 A2

# FIG.17

EP 1 507 401 A2

# FIG.18

150

| INSTRUCTION ID | — 205 |

| PROPERTY | — 206 |

207

| JOB ID | — 208 |
| INTERNAL JOB ID LIST | — 209 |

210

| INTERNAL JOB ID | — 211 |

| PROPERTY (CONTENT OF IMAGE DRAWING) | — 212 |

| JOB STATE | — 213 |

# FIG.19

```
<?xml version="1.0" encoding="UTF-8"?>
<SOAP-ENV:Envelope                    xmlns:SOAP-ENC="http://schemas.xmlsoap.org/soap/encoding/"
SOAP-ENV:encodingStyle="http://schemas.xmlsoap.org/soap/encoding/"
 xmlns:SOAP-ENV="http://schemas.xmlsoap.org/soap/envelope/"      xmlns:xsi="http://www.w3.org/1999/XMLSchema-instance"
xmlns:xsd="http://www.w3.org/1999/XMLSchema">
<SOAP-ENV:Body>
<tmns:setJobInstruction                    xmlns:xs="http://www.w3.org/2001/XMLSchema"
xmlns:ie="http://www.ricoh.co.jp/xmlns/schema/rdh/imageEdit"    xmlns:tmns="http://www.ricoh.co.jp/xmlns/soap/rdh/imageEdit"
xmlns:ct="http://www.ricoh.co.jp/xmlns/schema/rdh/commontypes">
<sessionId>041981070379790</sessionId><jobInstructionId>http://xxx.yyy.zzz/rdh/imageEdit/4584750184072</jobInstructionId>
<objectIds                             xmlns:soap-enc="http://schemas.xmlsoap.org/soap/encoding/"
xmlns:itt="http://www.ricoh.co.jp/xmlns/schema/rdh/commontypes"
Soap-enc:arrayType="itt:anyUrl[2]"><item><propName>rp:contentElementId</propName><propVal>http://xxx.yyy.zzz/rdh/rep
ository/did=4280&amp;cspec=1-20</propVal></item><item><propName>rp:contentElementId</propName><propVal>http://xx
x.yyy.zzz/rdh/repository/did=3482&amp;cspec=1-10</propVal></item></objectIds>
<otherProps                                xmlns:soap-enc="http://schemas.xmlsoap.org/soap/encoding/"
xmlns:itt="http://www.ricoh.co.jp/xmlns/schema/rdh/commontypes" soap-enc:arrayType="itt:property[1]">
<item><propName>ie:editType</propName><propVal>erasePunch</propVal></item>
</otherProps>
</tmns:setJobInstruction></SOAP-ENV:Body></SOAP-ENV:Envelope>
```

214

215

216

EP 1 507 401 A2

# FIG.20

```
<?xml version="1.0" encoding="UTF-8"?>
<SOAP-ENV:Envelope          xmlns:SOAP-ENC="http://schemas.xmlsoap.org/soap/encoding/"
SOAP-ENV:encodingStyle="http://schemas.xmlsoap.org/soap/encoding/"
xmlns:SOAP-ENV="http://schemas.xmlsoap.org/soap/envelope/"          xmlns:xsi="http://www.w3.org/1999/XMLSchema-instance"
xmlns:xsd="http://www.w3.org/1999/XMLSchema">
<SOAP-ENV:Body>
<tmns:setJobInstruction                                          xmlns:xs="http://www.w3.org/2001/XMLSchema"
xmlns:ie="http://www.ricoh.co.jp/xmlns/schema/rdb/imageEdit"       xmlns:tmns="http://www.ricoh.co.jp/xmlns/soap/rdb/imageEdit"
xmlns:ct="http://www.ricoh.co.jp/xmlns/schema/rdb/commontypes">
<sessionId>041981070379790</sessionId><jobInstructionId>http://xxx.yyy.zzz/rdb/imageEdit/4584750184072</jobInstructionId>
<objectIds                                    xmlns:soap-enc="http://schemas.xmlsoap.org/soap/encoding/"
xmlns:itt="http://www.ricoh.co.jp/xmlns/schema/rdb/commontypes"
soap-enc:arrayType="itt:anyUrl[2]"><item><propName>rp:contentElementId</propName><propVal>http://xxx.yyy.zzz/rdb/rep
ository/did=134&amp;cspec=13</propVal></item></objectIds>
<otherProps                                    xmlns:soap-enc="http://schemas.xmlsoap.org/soap/encoding/"
xmlns:itt="http://www.ricoh.co.jp/xmlns/schema/rdb/commontypes" soap-enc:arrayType="itt:property[4]">
<item><propName>ie:editType</propName><propVal>drawRectangle</propVal></item>
<item><propName>ie:coordinate</propName><propVal>(300,400)-(1000,1000)</propVal></item>
<item><propName>ie:frameColor</propName><propVal>black</propVal></item>
<item><propName>ie:drawColor</propName><propVal>red</propVal></item>
</otherProps>
</tmns:setJobInstruction></SOAP-ENV:Body></SOAP-ENV:Envelope>
```

217
218
219
220
221

# FIG.21

# FIG.22

EP 1 507 401 A2

# FIG.23

**CLIENT** 222
**WEB BROWSER** 223

**CLEINT** 102
**CLEINT APPL.** 135

134

**OPERATION PANEL** 52

**NCS** — **HTTPD** 34

204

**OCS** 33

**WEB APPL.**

**SOAP I/F** 133

**DOC. EDIT APPL.** 130 131

**WS DOC. EDIT SERVICE**

**WS DOC. MANAGE SERVICE** 132

**DOC. BOX APPL.** 224

**DOC. EDIT SERVICE SF** 29

**DOC. MANAGE SERVICE SF** 28

**PRINT SERVICE SF** 225

**MCS** 36

**SCS** 38

**ECS** 35

**IMH** 41

**PLOTTER** 12

65

**PRINT**

**IMAGE PROCESS UNIT** 72

**IMAGE SKEW DETECT UNIT** 31

**IMAGE PROCESS ACCELERATOR** 44

**IMAGE SKEW DETECT ACCELERATOR** 43

# FIG.24

222 — CLIENT
223 — WEB BROWSER

102 — CLIENT
135 — CLEINT APPL.

134

52 — OPERATION PANEL

34 — DELIVERY

HTTPD   NCS

33 — OCS

204 — WEB APPL.

SOAP I/F — 133

130 — DOC. EDIT APPL.

131 — WS DOC. EDIT SERVICE

132 — WS DOC. MANAGE SERVICE

226 — WS DELIVERY SERVICE

29 — DOC. EDIT SERVICE SF

DOC. MANAGE SERVICE SF — 28

227 — DELIVERY SERVICE SF

36 — MCS

SCS — 38

32 — DCS

41 — IMH

65

72 — IMAGE PROCESS UNIT

31 — IMAGE SKEW DETECT UNIT

44 — IMAGE PROCESS ACCELERATOR

43 — IMAGE SKEW DETECT ACCELERATOR

# FIG.25

# FIG.26

EP 1 507 401 A2

# FIG.27

NCS (NETWORK CONTROL SERVICE) — 34

SOAP I/F — 133

131

COMMAND DISPATCHER — 143

WS DOC. MANAGE SERVICE

REPOSITORY CLIENT

JOB CONTROLLER

JOB WATCHER

145

JOB INTERPRETER

144

147

IMAGE EDITOR — 148

132

146

MCS (DOC. CONTROL SERVICE) — 36

EP 1 507 401 A2

EP 1 507 401 A2

# FIG.28

CLIENT — 102

WS DOC. MANAGE SERVICE — 132

startSession — S101

[SessionId] — S102

getDocList — S103

[docId List] — S104

getProps[docId] — S105

[propery List] — S106

.

.

lockObject[docId] — S107

getDocTicket[docId] — S108

[ticketId] — S109

getPage[docId, pageNo, scaleFactor] — S110

[IMAGE DATA TO BE DISPLAYED] — S111

51

## FIG.29

| CLIENT (102) | WS DOC. MANAGE SERVICE (132) | WS DOC. EDIT SERVICE (131) |
|---|---|---|

startSession — S201

[SessionId] — S202

createJobInstructionByTicket — S203

startSessionByTicket — S204

[SessionId] — S205

getDocIdsByTicket — S206

[DocIds] — S207

[jobInstructionId] — S208

setJobInstruction[operationList] — S209

[jobInstructionId] — S210

createJob[jobInstructionId] — S211

[jobId] — S212

getJobProperty[jobId] — S213

[jobPropertyList] — S214

terminateSession — S215

EP 1 507 401 A2

# FIG.30

START

DOC. LIST IS RECEIVED ⟋ S301

PROPERTY IS RECEIVED AND
DOC. LIST IS DISPLAYED ⟋ S302

DOCUMENT IS SELECTED ⟋ S303

SELECTED DOC. IS LOCKED ⟋ S304

DOC. EDIT PERMISSION TICKET IS RECEIVED ⟋ S305

THUMBNAIL IMAGE IS RECEIVED AND DISPLAYED ⟋ S306

JOB INSTRUCTION IS CREATED ⟋ S307

OPERATION ⟋ S308

S309
EDIT OPERATION ? — yes

no

THUMBNAIL IMAGE IS PROCESSED
ACCORDING TO EDIT OPERATION ⟋ S310

EDIT OPERATION INFO
(COORDINATE, COLOR) IS
SET TO JOB INSTRUCTION ⟋ S311

JOB IS CREATED AND PERFORMED
ACCORDING TO JOB INSTRUCTION ⟋ S312

TICKET IS DELETED ⟋ S313

SELECTED DOC. IS UNLOCKED ⟋ S314

OPERATION ⟋ S315

S316
JOB
READING OPERATION
? — yes

no

JOB STATE IS READ ⟋ S317

JOB STATE IS DISPLAYED ⟋ S318

END

# FIG.31

START

DOC. LIST IS RECEIVED — S801

DOC. PROPERTY IS RECEIVED — S802

S803 — WAITING FOR OPERATION

S804 — DOCUMENT IS SELECTED ?

No

S805

OTHER PROCESSES

Yes

SELECTED DOC. IS LOCKED — S806

DOC. EDIT PERMISSION TICKET IS RECEIVED — S807

DOC. EDIT MODULE IS CALLED — S808

WAITING FOR OPERATION — S809

SELECTED DOC. IS UNLOCKED — S810

# FIG.32

START

THUMBNAIL IMAGE READING REQUEST IS SENT — S901

THUMBNAIL IMAGE IS DISPLAYED — S902

JOB INSTRUCTION IS CREATED — S903

WAITING FOR OPERATION — S904

S905

EDIT OPERATION ? — Yes

No

REQUEST OF THUMBNAIL IMAGE PROCESS ACCORDING TO EDIT OPERATION IS SENT — S906

EDIT OPERATION INFO (COORDINATE, COLOR) IS SET TO JOB INSTRUCTION — S907

EDIT JOB IS CREATED AND PERFORMED ACCORDING TO JOB INSTRUCTION — S908

TICKET IS DELETED — S909

END

# FIG.33

```
        ┌─────────────┐
        │    START    │
        └──────┬──────┘
               │
               ▼
   ┌───────────────────────┐
   │  WAITING FOR RECEIVING │ ⌒ S1001
   │    THUMBNAIL IMAGE     │
   │    READING REQUEST     │
   └───────────┬───────────┘
               │
               ▼
   ┌───────────────────────┐
   │ THUMBNAIL IMAGE IS     │ ⌒ S1002
   │      ACQUIRED          │
   └───────────┬───────────┘
               │
               ▼
   ┌───────────────────────┐
   │ THUMBNAIL IMAGE IS     │ ⌒ S1003
   │      SUPPLIED          │
   └───────────┬───────────┘
               │
               ▼
        ┌─────────────┐
        │     END     │
        └─────────────┘
```

# FIG.34

```
        ┌──────────┐
        │  START   │
        └──────────┘
             │
             ▼
┌─────────────────────────┐
│   WAITING FOR RECEIVING  │  ～ S1101
│     THUMBNAIL IMAGE      │
│     PROCESS REQUEST      │
└─────────────────────────┘
             │
             ▼
┌─────────────────────────┐
│    THUMBNAIL IMAGE IS    │  ～ S1102
│   PROCESSED AND STORED   │
└─────────────────────────┘
             │
             ▼
┌─────────────────────────┐
│   PROCESSED THUMBNAIL    │  ～ S1103
│     IMAGE IS SUPPLIED    │
└─────────────────────────┘
             │
             ▼
        ┌──────────┐
        │   END    │
        └──────────┘
```

# FIG.35

```
                        ┌─────────────┐
                        │    START    │
                        └──────┬──────┘
                               │
                 ┌─────────────────────────┐
                 │  SOAP COMMAND IS        │ ～ S401
                 │  RECEIVED               │
                 └────────────┬────────────┘
                              │
                 ┌─────────────────────────┐
                 │  SOAP ANALYSIS          │ ～ S402
                 └────────────┬────────────┘
                              │
                 ┌─────────────────────────┐
                 │  SOAP COMMAND ANALYSIS  │ ～ S403
                 └────────────┬────────────┘
                              │
                 ┌─────────────────────────┐
                 │  COMMAND PROCESSING     │ ～ S404
                 │  FUNCTION IS CALLED     │
                 └────────────┬────────────┘
                              │
                 ┌─────────────────────────┐
                 │  COMMAND REPLY IS SENT  │ ～ S405
                 └────────────┬────────────┘
                              │
                        ┌─────────────┐
                        │     END     │
                        └─────────────┘
```

# FIG.36

```
        ┌─────────────┐
        │    START    │
        └─────────────┘
               │
    ┌──────────────────────┐
    │ COMMAND IS RECEIVED  │ ～ S501
    └──────────────────────┘
               │
    ┌──────────────────────┐
    │  COMMAND ANALYSIS    │ ～ S502
    └──────────────────────┘
               │
    ┌──────────────────────┐
    │ COMMAND PROCESSING   │ ～ S503
    │ FUNCTION IS CALLED   │
    └──────────────────────┘
               │
    ┌──────────────────────┐
    │ COMMAND REPLY IS SENT│ ～ S504
    └──────────────────────┘
               │
        ┌─────────────┐
        │     END     │
        └─────────────┘
```

# FIG.37

START

SOAP COMMAND IS RECEIVED — S601 — SOAP I/F PROCESSES

SOAP ANALYSIS — S602

S603 — COMMAND ANALYSIS — COMMAND DISPATCHER PROCESSES

JOB CONTROLLER PROCESSES

S604 — JOB INSTRUCTION IS CREATED ?

yes

no

S607 — EDIT OPERATION INFO IS SET ?

yes

MEMORY FOR JOB INSTRUCTION IS SET UP — S605

S608 — MEMORY FOR EDIT OPERATION INFO IS SET UP

DOC. ID IS RECEIVED AND SET TO JOB INSTRUCTION — S606

no

JOB IS CREATED AND PERFORMED ? — S610

yes

S609 — EDIT OPERATION INFO IS SET TO JOB INSTRUCTION

no

JOB IS CREATED ACCORDING TO JOB INSTRUCTION — S611

yes

JOB IS CANCELED ? — S622

no

JOB INCLUDES PLURAL PAGES ? — S614

no

S612 — PLURAL-PAGE JOB IS CREATED

yes

SINGLE-PAGE JOB IS CREATED

S623 — JOB STATE IS CHECKED

S613

PLANE COMPOSITION ANALYSIS — S615

S624 — JOB IS NOT PERFORMED ?

yes

PLANE JOB IS CREATED — S616

S625 — JOB IS DELETED FROM QUEUE

no

EDIT JOB IS CREATED ACCORDING TO EDIT OPERATION INFO — S617

S626 — JOB IS IN PROGRESS ?

yes

S629 — JOB IS READ ?

FINAL EDIT OPERATION INFO ? — S618

no

S627 — FORCEFUL TERMINATING SIGNAL

no

yes

no

yes

PLANE JOB IS ENQUEUED — S619

JOB IS DELETED FROM QUEUE

JOB IS READ — S630

S620

S628

FINAL PLANE ? — no

JOB WATCHER PROCESS

yes — S621

FINAL IMAGE ? — no

S631

yes

JOB INTERPRETER PROCESSES

SOAP REPLAY IS SENT

END — SOAP I/F PROCESS

# FIG.38

START — S701

PLANE JOB EXISTS ? — no / yes

PLANE JOB IS SELECTED — S702

DOC. OF INTEREST IS OPENED — S703

PAGE OF INTEREST IS OPENED — S704

PLANE OF INTEREST IS OPENED — S705

MEMORY IS SET UP — S706

PLANE IMAGE IS LOADED TO MEMORY — S708

CORRESPONDING EDIT JOB EXISTS ? — S709 — yes / no

EDIT INFO IS READ ACCORDING TO EDIT JOB — S710

PLANE IMAGE ON MEMORY IS EDITED BASED ON EDIT INFO — S711

FORCEFUL TERMINATION ? — S712 — yes / no

SHIFTED TO NEXT EDIT JOB — S714

SHIFTED TO SUSPENDED CONDITION — S713

PLANE IMAGE ON MEMORY IS WRITTEN — S715

SHIFTED TO COMPLETION — S716

MEMORY IS RELEASED — S717

PLANE OF INTEREST IS CLOSED — S718

PAGE OF INTEREST IS CLOSED — S719

DOC. OF INTEREST IS CLOSED — S720

## FIG.39

# FIG.40

Job Instruction ID: 001
Doc ID: 1234
  PageRange:1-10
OperationNum:2
&operation[0]
&operation[1]

150

OPERATION:
153
001: LINE DRAWING
002: RECTANGLE DRAWING
003: CIRCLE DRAWING
004: LINE GRAPH DRAWING

151
OpId : 001
Operation: 002
Coordinate1:
              120, 120
Coordinate2 :
              420, 420
lineColor:
        R:255,G:0,B:0
AreaColor:
R:255,G:255,B:255

152
OpId : 002
Operation: 003
Coordinate1:
              540, 540
radius :
                 240
lineColor:
        R:0, G:0,B:255
AreaColor:
R:0,G:0,B:255

156
(20, 20)  (70, 70)  154

T

(0,0)

155

(90, 90)  157

T

EP 1 507 401 A2

# FIG.41

jobQueueHeader

| next | prev |
|---|---|

170

171

**JOB HEADER**
next
prev
job ID
job Instruction ID
doc ID
status
page JOB HEADER
I-next

172

173

174

| next | prev |
|---|---|

176    177

pageJobId
jobId
pageNo
status
planeJobHeader
I-next

I-next → I-next → I-next → I-next

178

180

next
prev
I-next

Next
prev
I-next

planeJobId
pagejobId
plane
status
opJobHeader
I-next

179

181

183

OpId : 001
Operation: 002
Coordinate1:
                120, 120
Coordinate2 :
                420, 420
lineColor:
        C:0,M:255,Y:255,K:0
AreaColor:
        C:0, M:0, Y:0, K:0

I-next → I-next → I-next → I-next

182

EP 1 507 401 A2

# FIG.42

planeJobQueueHeader 183

184
planeJobId
pagejobId
plane
status
opJobHeader
l-next

185 — next / prev / l-next

186
187
188

next / prev (boxes: Next / prev / l-next)

EP 1 507 401 A2

FIG.43

OpId : 001
Operation: 002
Coordinate1:
120, 120
Coordinate2 :
420, 420
lineColor:
R:255,G:0,B:0
AreaColor:
R:255,G:255,B:255

I-next
OpId : 001
Operation: 002
Coordinate1:
120, 120
Coordinate2 :
420, 420
lineColor:
C:0,M:255,Y:255,K:0
AreaColor:
C:0, M:0, Y:0, K:0

$C'=255-R$
$M'=255-G$
$Y'=255-B$
$K=min(C', M', Y')$
$C=C'-K$
$M=M'-K$
$Y=Y'-K$

EP 1 507 401 A2